(19) Europäisches Patentamt
European Patent Office
Office européen des brevets

(11) **EP 3 094 143 B1**

(12) **EUROPÄISCHE PATENTSCHRIFT**

(45) Veröffentlichungstag und Bekanntmachung des Hinweises auf die Patenterteilung:
**30.08.2017 Patentblatt 2017/35**

(51) Int Cl.:
**H04W 64/00** *(2009.01)*    **G01S 5/00** *(2006.01)*

(21) Anmeldenummer: **15167304.3**

(22) Anmeldetag: **12.05.2015**

(54) **DRAHTLOSE KOMMUNIKATIONSSYSTEME UND VERFAHREN ZUM ERKENNEN EINES FEHLERHAFTEN MESSWERTES BEI EINER STRECKENMESSUNG ZWISCHEN ZWEI EINRICHTUNGEN**

WIRELESS COMMUNICATION SYSTEMS AND METHODS FOR DETECTING A FAULTY MEASURED VALUE AT A PATH MEASUREMENT BETWEEN TWO DEVICES

SYSTÈMES DE COMMUNICATION SANS FIL ET PROCÉDÉS DE RECONNAISSANCE D'UNE VALEUR MESURÉE ERRONÉE LORS DE LA MESURE DE CHEMIN ENTRE DEUX DISPOSITIFS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.11.2016 Patentblatt 2016/46**

(73) Patentinhaber: **Deutsche Telekom AG**
**53113 Bonn (DE)**

(72) Erfinder: **Witych, Michael**
**53227 Bonn (DE)**

(74) Vertreter: **Blumbach Zinngrebe**
**Patentanwälte**
**Alexandrastrasse 5**
**65187 Wiesbaden (DE)**

(56) Entgegenhaltungen:
**US-A1- 2013 170 484    US-A1- 2013 178 226**

**Beschreibung**

Die Erfindung betrifft ein Verfahren sowie ein drahtloses Kommunikationssystem zum Erkennen eines fehlerhaften Streckenmesswertes bei einer Streckenmessung zwischen einer ersten mobilen Kommunikationseinrichtung, die eine Streckenmesseinrichtung zur Streckenmessung und eine Messeinrichtung zur Bestimmung einer relativen Positionskoordinatenänderung zwischen zwei Zeitpunkten aufweist, und einer stationären Einrichtung oder einer zweiten mobilen Kommunikationseinrichtung, wobei die absoluten Positionen der mobilen ersten Kommunikationseinrichtung, der stationären Einrichtung und der zweiten mobilen Kommunikationseinrichtung entweder nicht bekannt sind oder nicht bei den Berechnungen zur Fehlererkennung berücksichtigt werden. Zudem betrifft die Erfindung ein Computerprogramm. Heutige Smartphones sind mit zahlreichen Funktionen ausgestattet. Beispielsweise kann ein Smartphone eine Positionsbestimmung mittels eines GPS-Empfängers durchführen, eine relative Bewegung mittels eines Beschleunigungssensors bestimmen, oder eine Strecke zu einem anderen Smartphone mittels geeigneter Streckenmesseinrichtungen messen. Ein Beispiel dafür ist z.B. im Dokument US 2003/0170484 zu finden. Der Erfindung liegt die Aufgabe zugrunde, ein drahtloses Kommunikationssystem, ein Verfahren und ein Computerprogramm bereitzustellen, mit denen es möglich ist, Fehler bei einer Streckenmessung zwischen einer mobilen Kommunikationseinrichtung und einer stationären Einrichtung oder einer weiteren mobilen Kommunikationseinrichtung, schnell und zuverlässig zu erkennen, und zwar ohne dass die absoluten Positionen der mobilen Kommunikationseinrichtungen und der stationären Einrichtung bei den Berechnungen zur Fehlererkennung berücksichtigt werden.

Die Erfindung beruht unter anderem auf der Erkenntnis, dass Messfehler bei einer Streckenmessung, wie zum Beispiel einer RSS (Received Signal Strength)-basierten Streckenmessung oder einer auf einer Laufzeitmessung basierten Streckenmessung, in der Regel von der zu messenden Streckenlänge abhängig sind, so dass grundsätzlich Messfehler mit der Länge der Strecke zunehmen.

Des Weiteren ist bekannt, dass in heutigen Smartphones bereits Beschleunigungsmesser verwendet werden, die ohne zusätzliche Infrastruktur außerhalb des Smartphones auskommen und völlig unabhängig von der absoluten Position der Smartphones relative Positionskoordinatenänderungen mit einer hohen Messgenauigkeit messen können, wenn die relativen Positionskoordinatenänderungen zwischen zwei Zeitpunkten gemessen wird, deren zeitlicher Abstand klein ist (z.B. weniger als eine Sekunde), sodass im diesem Fall auch von einem kurzzeitstabilen Beschleunigungsmesser gesprochen werden kann.

Ein Kerngedanke der Erfindung kann somit darin gesehen werden, ein mittels einer Streckenmesseinrichtung durchgeführtes Messverfahren zur Streckenmessung und ein von einer Messeinrichtung ausgeführtes Messverfahren zur Bestimmung einer relativen Positionskoordinatenänderung zwischen zwei Zeitpunkten derart zu kombinieren, dass mit Hilfe der Messergebnisse der Messeinrichtung, welche ein Beschleunigungssensor sein kann, die Messergebnisse der Streckenmesseinrichtung auf Plausibilität hin überprüft werden können. Auf diese Weise können unplausible Sprünge in den Streckenmesswerten, zum Beispiel infolge von Hindernissen auf dem Signalweg, aufgedeckt und sogar korrigiert werden.

Das erfindungsgemäße Verfahren und das erfindungsgemäße drahtlose Kommunikationssystem finden insbesondere in geschlossenen Gebäuden Anwendung, wo in der Regel für die mobilen Kommunikationseinrichtungen oft keine absoluten Positionsdaten zur Verfügung stehen. Mit dem erfindungsgemäßen Verfahren können dann relative Positionsinformationen, z.B. Abstände, gewonnen werden, die aus zwei unabhängigen Messmethoden gewonnen worden sind, die sich gegenseitig kontrollieren.

Das oben genannte technische Problem wird zum einen durch die Verfahrensschritte des Anspruchs 1 gelöst.

Danach ist ein Verfahren zum Erkennen eines fehlerhaften Streckenmesswertes bei einer Streckenmessung zwischen einer ersten mobilen Kommunikationseinrichtung, die eine Streckenmesseinrichtung zur Streckenmessung und eine Messeinrichtung zur Bestimmung einer relativen Positionskoordinatenänderung zwischen zwei Zeitpunkten aufweist, und einer stationären Einrichtung vorgesehen. Das Verfahren weist folgende Schritte auf:

a) Messen zu zwei aufeinanderfolgenden Zeitpunkten t(i-1) und t(i), mit i=1, der Strecke zwischen der mobilen Kommunikationseinrichtung und der stationären Einrichtung, um jeweils einen Streckenmesswert zu den Zeitpunkten t(i) und t(i-1) zu erhalten;

b) Ermitteln der Positionskoordinatenänderung der ersten mobilen Kommunikationseinrichtung zwischen dem Zeitpunkt t(i) und dem zeitlich früheren Zeitpunkt t(i-1);

c) Ermitteln für den Zeitpunkt t(i) der Abstandsänderung zwischen der ersten mobilen Kommunikationseinrichtung und der stationären Einrichtung in Abhängigkeit von der zwischen dem Zeitpunkt t(i) und dem früheren Zeitpunkt t(i-1) gemessenen Positionskoordinatenänderung der ersten mobilen Kommunikationseinrichtung;

d) Berechnen für den Zeitpunkt t(i) eines ersten Differenzwerts aus dem zum Zeitpunkt t(i) gemessenen Streckenmesswert und dem zu dem früheren Zeitpunkt t(i-1) gemessenen Streckenmesswert;

e) Berechnen für den Zeitpunkt t(i) eines zweiten Differenzwertes zwischen dem in Schritt d) für den Zeitpunkt t(i) und dem Zeitpunkt t(i-1) ermittelten ersten Differenzwert und der in Schritt c) zwischen dem Zeitpunkt t(i) und dem zeitlich früheren Zeitpunkt t(i-1) ermittelten Abstandsänderung und Prüfen, ob der zweite Differenzwert betragsmäßig größer als ein vorbestimmter Schwellenwert ist, um einen fehlerhaften Streckenmesswert zu erkennen.

Das oben genannte technische Problem wird zum einen durch die Verfahrensschritte des Anspruchs 2 gelöst.

Danach wird ein Verfahren zum Erkennen eines fehlerhaften Streckenmesswertes bei einer Streckenmessung zwischen einer ersten mobilen Kommunikationseinrichtung, die eine Streckenmesseinrichtung zur Streckenmessung und eine Messeinrichtung zur Bestimmung einer relativen Positionskoordinatenänderung zwischen zwei Zeitpunkten aufweist, und wenigstens einer zweiten mobilen Kommunikationseinrichtung, die eine Messeinrichtung zur Bestimmung einer relativen Positionskoordinatenänderung zwischen zwei Zeitpunkten aufweist, zur Verfügung gestellt. Das Verfahren weist folgende Schritte auf:

a) Messen zu zwei aufeinanderfolgenden Zeitpunkten t(i-1) und t(i), mit i= 1, der Strecke zwischen der ersten mobilen Kommunikationseinrichtung und der zweiten mobilen Kommunikationseinrichtung, um jeweils einen Streckenmesswert zu den Zeitpunkten t(i) und t(i-1) zu erhalten;

b1) Ermitteln der relativen Positionskoordinatenänderung der ersten mobilen Kommunikationseinrichtung zwischen dem Zeitpunkt t(i) und dem zeitlich früheren Zeitpunkt t(i-1);

b2) Ermitteln der relativen Positionskoordinatenänderung der zweiten mobilen Kommunikationseinrichtung zwischen dem Zeitpunkt t(i) und dem zeitlich früheren Zeitpunkt t(i-1);

c) Ermitteln für den Zeitpunkt t(i) der Abstandsänderung zwischen der ersten mobilen Kommunikationseinrichtung und der zweiten mobilen Kommunikationseinrichtung in Abhängigkeit von der zwischen dem Zeitpunkt t(i) und dem früheren Zeitpunkt t(i-1) gemessenen Positionskoordinatenänderung der ersten mobilen Kommunikationseinrichtung und in Abhängigkeit von der zwischen dem Zeitpunkt t(i) und dem früheren Zeitpunkt t(i-1) gemessenen Positionskoordinatenänderung der zweiten mobilen Kommunikationseinrichtung;

d) Berechnen für den Zeitpunkt t(i) eines ersten Differenzwerts aus dem zum Zeitpunkt t(i) gemessenen Streckenmesswert und dem zu dem früheren Zeitpunkt t(i-1) gemessenen Streckenmesswert;

e) Berechnen für den Zeitpunkt t(i) eines zweiten Differenzwertes zwischen dem in Schritt d) für den Zeitpunkt t(i) und dem Zeitpunkt t(i-1) ermittelten ersten Differenzwert und der in Schritt c) zwischen dem Zeitpunkt t(i) und dem zeitlich früheren Zeitpunkt t(i-1) ermittelten Abstandsänderung und Prüfen, ob der zum Zeitpunkt t(i) berechnete zweite Differenzwert betragsmäßig größer als ein vorbestimmter Schwellenwert ist, um einen fehlerhaften Streckenmesswert zu erkennen.

Bei den mobilen Kommunikationseinrichtungen kann es sich zum Beispiel jeweils um ein Mobilfunktelefon, wie zum Beispiel ein Smartphone, ein PDA, ein Notebook oder dergleichen handeln. Bei der stationären Einrichtung kann es sich zum Beispiel um einen drahtlosen WLAN-Zugangspunkt oder auch um eine temporär ruhende mobile Kommunikationseinrichtung handeln.

Dank der Erfindung können fehlerhafte Messwerte bei einer Streckenmessung erkannt werden, und zwar ohne Verwendung absoluter Positionen und nur durch zusätzliche unabhängige relative Bewegungsmessungen bezüglich wenigstens einer der an der Streckenmessung beteiligten Einrichtungen.

Soll die Streckenmessung über einen längeren, beispielsweise einstellbaren Beobachtungszeitraum hin erfolgen, können die Schritte a) bis e) für mehrere aufeinanderfolgende Zeitpunkte t(i), mit i=2, 3, ... n wiederholt werden. Durch mehrere kontinuierliche Messungen zwischen der ersten mobilen Kommunikationseinrichtung und der stationären Einrichtung oder der zweiten mobilen Kommunikationseinrichtung können potentiell unplausible Sprünge in den Streckenmessungen aufgedeckt werden, da Zusatzinformationen über die relative Bewegung beziehungsweise die Abstandsänderung zwischen der ersten mobilen Kommunikationseinrichtung und der stationären Einrichtung oder der zweiten mobilen Kommunikationseinrichtung während dieses Zeitraums vorliegen. Mit anderen Worten ermöglicht das Verfahren, mehrere fehlerhafte Streckenmesswerte zu erkennen, da zwei messtechnisch unabhängige Verfahren sich gegenseitig kontrollieren.

An dieser Stelle sei angemerkt, dass in Schritt b) bzw. den Schritten b1) und b2) bei jeder Ermittlung einer relativen Positionskoordinatenänderung beziehungsweise eines Koordinatenfortschritts zwischen zwei Zeitpunkten t(i) und t(i-1) die Positionskoordinaten, die zum zeitlich früheren Messpunktes t(i-1) gültig sind und somit als Bezugskoordinaten fungieren, auf einen Default-Wert zurückgesetzt werden können. Denkbar ist aber auch, dass, beginnend mit einem Startpunkt, dessen Positionskoordinaten zum Startzeitpunkt t(0) beliebig vorgegeben werden können und als Bezugskoordinaten für die Ermittlung einer relativen Positionskoordinatenänderung zum Zeitpunkt t(1) dienen, Bezugskoordinaten für eine nachfolgende Berechnung relativer Positionskoordinatenänderungen zum Zeitpunkt t(2) dadurch gebildet werden, dass die zum Zeitpunkt t(1) gültige relative Positionskoordinatenänderung zu den Positionskoordinaten des Startpunktes addiert werden. Dieses Verfahren wiederholt sich dann für jede weitere Ermittlung relativer Positionskoordinatenänderungen.

Eine hohe Flexibilität des Verfahrens kann erzielt werden, wenn die Schritte a) bis e) unter Steuerung der ersten mobilen Kommunikationseinrichtung ausgeführt werden.

Demzufolge kann die zweite mobile Kommunikationseinrichtung von der ersten mobilen Kommunikationseinrichtung aufgefordert werden, ihre Positionskoordinaten zu ermitteln und die Positionskoordinaten mit den dazugehörenden Zeitpunkten zur ersten mobilen Kommunikationseinrichtung zu übertragen.

Um Berechnungsfehler gering zu halten, ist es zweckmäßig, dass die erste und zweite mobile Kommunikationseinrichtung synchronisiert werden. Hierzu können bekannte Synchronisationsverfahren eingesetzt werden, die jedoch nicht Gegenstand der Erfindung sind. Auf diese Weise kann sichergestellt werden, dass insbesondere die in Schritt a) gemessenen Strecken und die in Schritt b) bzw. den Schritten b1) und b2) ermittelten Positionskoordinaten zu im wesentlichen gleichen Zeitpunkten ermittelt werden.

Die in Schritt a) ausgeführte Streckenmessung kann beispielsweise mittels einer RSS (Received Signal Strength)-basierten Streckenmessung oder einer auf einer Laufzeitmessung basierten Streckenmessung zwischen der ersten mobilen Kommunikationseinrichtung und der stationären Einrichtung oder der zweiten mobilen Kommunikationseinrichtung durchgeführt werden. Bei der Laufzeitmessung kann es sich beispielsweise um dass RTT (Round Trip Time)-Verfahren handeln

Vorteilhafter Weise wird ein in Schritt e) als fehlerhaft erkannter Streckenmesswert korrigiert.

Ein beispielhaftes Korrekturverfahren sieht vor, dass der für einen Zeitpunkt t(i) als fehlerhaft erkannte Streckenmesswerts durch einen Korrekturwert ersetzt wird, welcher in Abhängigkeit von wenigstens einem zeitlich vorher gemessenen Streckenmesswert und/oder wenigstens einem zeitlich später gemessen und/oder einem zeitlich vorher gemessenen Streckenmesswert, welche als nicht fehlerhaft oder statistisch gesehen weniger fehlerhaft erkannt worden sind, gebildet wird.

Alternativ kann der Korrekturwert auch in Abhängigkeit von dem zweiten Differenzwert gebildet werden.

Um eine - zeitlich gesehen - Rückwärtskorrektur oder Vorwärtskorrektur fehlerhaft erkannter Streckenmesswerte zu ermöglichen, werden die ermittelten Abstandsänderungen, die in Schritt a) erhaltenen Streckenmesswerte, die berechneten ersten Differenzwerte sowie die jeweils dazugehörenden Zeitpunkte t(i) und t(i-1) in der ersten mobilen Kommunikationseinrichtung gespeichert. Wenn der in Schritt e) zum Zeitpunkt t(i) berechnete zweite Differenzwert betragsmäßig größer als der Schwellenwert ist und ein negatives Vorzeichen besitzt, wird wenigstens der zu dem früheren Zeitpunkt t(i-1) gemessene Streckenmesswert als fehlerhaft erkannt und korrigiert. Wenn der in Schritt e) zum Zeitpunkt t(i) berechnete zweite Differenzwert betragsmäßig größer als der Schwellenwert ist und ein positives Vorzeichen besitzt, werden der zum Zeitpunkt t(i) gemessene Streckenmesswert und wenigstens der zu einem späteren Zeitpunkt t(i+k), mit k=1, 2, 3, ...1, gemessene Streckenmesswert als fehlerhaft erkannt und korrigiert.

Eine vorteilhafte Weiterbildung sieht vor, dass in der ersten mobilen Kommunikationseinrichtung ein Algorithmus zum Bestimmen der Position der ersten mobilen Kommunikationseinrichtung unter Berücksichtigung der korrigierten Streckenmesswerte und der Position der stationären Einrichtung oder der zweiten mobilen Kommunikationseinrichtung durchgeführt wird.

Ein Algorithmus zum Bestimmen der Position einer mobilen Kommunikationseinrichtung unter Berücksichtigung von gemessenen Strecken ist beispielsweise aus der WO2014/180845 bekannt. Werden in den bekannten Algorithmus die gemäß dem vorliegenden Verfahren korrigierten Streckenmesswerte verwendet, kann die Position der ersten mobilen Kommunikationseinrichtung präziser berechnet werden.

Sind neben der ersten mobilen Kommunikationseinrichtung, der stationärem Einrichtung oder der zweiten mobilen Kommunikationseinrichtung noch wenigstens eine weitere mobile Kommunikationseinrichtung oder eine weitere stationäre Einrichtung im Erfassungsbereich der ersten mobilen Kommunikationseinrichtung, so dass gemäß dem vorliegenden Verfahren korrigierte Streckenmessungen ermittelt werden können, kann der Algorithmus zur Bestimmung der Position der ersten mobilen Kommunikationseinrichtung auch auf einem aus der Geodäsie bekannten geometrischen Ausgleichsverfahren beruhen.

Vorteilhafter Weise wird in Schritt c) die betragsmäßig maximale Abstandsänderung zwischen der mobilen Kommunikationseinrichtung und der Station ermittelt.

Das oben genannte technische Problem wird ebenfalls durch die Merkmale des Anspruchs 14 gelöst.

Danach wird ein drahtloses Kommunikationssystem zum Erkennen eines fehlerhaften Streckenmesswertes bei einer Streckenmessung zwischen einer ersten mobilen Kommunikationseinrichtung und einer stationären Einrichtung umschrieben. Das drahtlose Kommunikationssystem weist folgende Merkmale auf:

wenigstens eine stationäre Einrichtung,
wenigstens eine erste mobile Kommunikationseinrichtung, die eine Streckenmesseinrichtung zum Messen der Strecke zwischen der ersten mobilen Kommunikationseinrichtung und der stationären Einrichtung, eine Messeinrichtung zum Messen einer relativen Positionskoordinatenänderung der ersten mobilen Kommunikationseinrichtung zwischen zwei Zeitpunkten, und eine Auswerte- und Steuereinrichtung aufweist, die dazu ausgebildet ist,

a) die Streckenmesseinrichtung zu veranlassen, zu zwei aufeinanderfolgenden Zeitpunkten t(i-1) und t(i), mit i=1, die Strecke zwischen der ersten mobilen Kommunikationseinrichtung und der stationären Einrichtung zu messen, um jeweils einen Streckenmesswert zu den Zeitpunkten t(i) und t(i-1) zu erhalten,

b) die Messeinrichtung zu veranlassen,

eine relative Positionskoordinatenänderung der ersten mobilen Kommunikationseinrichtung zwischen dem Zeitpunkt t(i) und dem zeitlich früheren Zeitpunkt t(i-1) zu ermitteln,

c) für den Zeitpunkte t(i) die Abstandsänderung zwischen der ersten mobilen Kommunikationseinrichtung und der stationären Einrichtung in Abhängigkeit von der zwischen dem Zeitpunkt t(i) und dem zeitlich früheren Zeitpunkt t(i-1) gemessenen relativen Positionskoordinatenänderung zu ermitteln,

d) für den Zeitpunkt t(i) einen ersten Differenzwert aus dem zum Zeitpunkt t(i) gemessenen Streckenmesswert und dem zum Zeitpunkt t(i-1) gemessenen Streckenmesswert zu berechnen, und

e) für den Zeitpunkt t(i) einen zweiten Differenzwert zwischen dem in Merkmal d) für den Zeitpunkt t(i) und dem früheren Zeitpunkt t(i-1) ermittelten ersten Differenzwert und der in Merkmal c) zwischen dem Zeitpunkt t(i) und dem zeitlich früheren Zeitpunkt t(i-1) ermittelten Abstandsänderung zu berechnen und zu prüfen, ob der zum Zeitpunkt t(i) berechnete zweite Differenzwert betragsmäßig größer als ein vorbestimmter Schwellenwert ist, um einen fehlerhaften Streckenmesswert zu erkennen.

Das oben genannte technische Problem wird ebenfalls durch die Merkmale des Anspruchs 15 gelöst.

Danach wird ein drahtloses Kommunikationssystem zum Erkennen eines fehlerhaften Streckenmesswertes bei einer Streckenmessung zwischen wenigstens zwei mobilen Kommunikationseinrichtungen umschrieben. Das drahtlose Kommunikationssystem weist folgende Merkmale auf:

eine erste mobile Kommunikationseinrichtung, die eine Streckenmesseinrichtung zum Messen der Strecke zwischen der ersten mobilen Kommunikationseinrichtung und wenigstens einer zweiten mobilen Kommunikationseinrichtung, eine Messeinrichtung zum Messen einer relativen Positionskoordinatenänderung der ersten mobilen Kommunikationseinrichtung zwischen zwei Zeitpunkten, und eine Auswerte- und Steuereinrichtung aufweist,

wobei die wenigstens eine zweite mobile Kommunikationseinrichtung eine Messeinrichtung zum Messen einer relativen Positionskoordinatenänderung der zweiten mobilen Kommunikationseinrichtung zwischen zwei Zeitpunkten und eine Auswerte- und Steuereinrichtung aufweist,

wobei die Auswerte- und Steuereinrichtung der ersten mobilen Kommunikationseinrichtung dazu ausgebildet ist,

a) die Streckenmesseinrichtung zu veranlassen, zu zwei aufeinanderfolgenden Zeitpunkten t(i-1) und t(i), mit i=1, die Strecke zwischen der ersten mobilen Kommunikationseinrichtung und der zweiten mobilen Kommunikationseinrichtung zu messen, um jeweils einen Streckenmesswert zu den Zeitpunkten t(i) und t(i-1) zu erhalten,

b1) die Messeinrichtung der ersten mobilen Kommunikationseinrichtung zu veranlassen, eine relative Positionskoordinatenänderung der ersten mobilen Kommunikationseinrichtung zwischen dem Zeitpunkt t(i) und dem zeitlich früheren Zeitpunkt t(i-1) zu ermitteln,

b2) die Messeinrichtung der zweiten mobilen Kommunikationseinrichtung zu veranlassen,

eine relative Positionskoordinatenänderung der zweiten mobilen Kommunikationseinrichtung zwischen dem Zeitpunkt t(i) und dem zeitlich früheren Zeitpunkt t(i-1) zu ermitteln, und die zweite mobile Kommunikationseinrichtung aufzufordern, relativen Positionskoordinatenänderungen und die dazugehörenden Zeitpunkte zur ersten mobilen Kommunikationseinrichtung zu übertragen,

c) für den Zeitpunkte t(i) die Abstandsänderung zwischen der ersten mobilen Kommunikationseinrichtung und der zweiten mobilen Kommunikationseinrichtung in Abhängigkeit von der zwischen dem Zeitpunkt t(i) und dem zeitlich früheren Zeitpunkt t(i-1) gemessenen Positionskoordinatenänderung der ersten mobilen Kommunikationseinrichtung und in Abhängigkeit von der zwischen dem Zeitpunkt t(i) und dem zeitlich früheren Zeitpunkt t(i-1) gemessenen Positionskoordinatenänderung der zweiten mobilen Kommunikationseinrichtung zu ermitteln,

d) für den Zeitpunkt t(i) einen ersten Differenzwert aus dem zum Zeitpunkt t(i) gemessenen Streckenmesswert und dem zum Zeitpunkt t(i-1) gemessenen Streckenmesswert zu berechnen, und

e) für den Zeitpunkt t(i) einen zweiten Differenzwert zwischen dem in Merkmal d) für den Zeitpunkt t(i) und dem früheren Zeitpunkt t(i-1) ermittelten ersten Differenzwert und der in Merkmal c) zwischen dem Zeitpunkt t(i) und dem zeitlich früheren Zeitpunkt t(i-1) ermittelten Abstandsänderung zu berechnen und zu prüfen, ob der zum Zeitpunkt t(i) berechnete zweite Differenzwert betragsmäßig größer als ein vorbestimmter Schwellenwert ist, um einen fehlerhaften Streckenmesswert zu erkennen.

Soll eine kontinuierliche Verfolgung oder Beobachtung von Streckenmessungen ermöglicht werden, kann die Auswerte- und Steuereinrichtung der ersten mobilen Kommunikationseinrichtung dazu ausgebildet sein, die Merkmale a) bis e) für mehrere aufeinanderfolgende Zeitpunkte t(i), mit i=1, 2, 3 ... n, zu wiederholen.

Vorteilhafterweise ist die Auswerte- und Steuereinrichtung der ersten mobilen Kommunikationseinrichtung dazu ausgebildet, den für einen Zeitpunkt t(i) als fehlerhaft erkannten Streckenmesswert zu korrigieren.

Die erste mobile Kommunikationseinrichtung kann vorzugsweise auch zur Bestimmung der absoluten Position verwendet werden. So ist die Auswerte- und Steuereinrichtung dazu ausgebildet, einen Algorithmus zum Bestimmen der Position der mobilen Kommunikationseinrichtung zum jeweiligen Zeitpunkt t(i) unter Berücksichtigung des korrigierten Streckenmesswertes und der zum jeweiligen Zeitpunkt t(i) gültigen Position der stationären Einrichtung oder der zum jeweiligen Zeitpunkt t(i) gültigen Position durchzuführen.

Betont sei an dieser Stelle noch einmal, dass jedoch die Prüfung der Streckenmesswerte auf unplausible Sprünge hin ohne Kenntnis beziehungsweise ohne Berücksichtigung der Positionen der ersten mobilen Kommunikationseinrichtung, der stationären Einrichtung oder der zweiten mobilen Kommunikationseinrichtung bestimmt werden.

Vorzugsweise enthält die Messeinrichtung der ersten und zweiten mobilen Kommunikationseinrichtung jeweils eine Beschleunigungsmesseinrichtung, welche relative Positionskoordinatenänderungen ermitteln kann, und zwar ohne Kenntnis beziehungsweise Berücksichtigung der absoluten Position.

Die Streckenmesseinrichtung ist vorzugsweise dazu ausgebildet, eine RSS (Received Signal Strength)-basierte Streckenmessung oder eine auf eine Laufzeitmessung (z. B. ein spezielles Laufzeitmessverfahren, das RTT (Round Trip Time)) basierte Streckenmessung zwischen der ersten mobilen Kommunikationseinrichtung und der stationären Einrichtung oder der zweiten mobilen Kommunikationseinrichtung durchzuführen. Angemerkt sei, dass die Streckenmesseinrichtung auf diese Ausführungsbeispiele jedoch nicht beschränkt ist. Insbesondere zukünftig noch zu entwickelnde Streckenmesseinrichtungen können hier, sofern sie zum Einsatz in einem Smartphone geeignet sind, verwendet werden.

Der Schwellenwert kann zum Beispiel in Abhängigkeit von Systemeigenschaften, wie zum Beispiel in Abhängigkeit von gerätespezifischen Messfehlern der verwendeten Messeinrichtungen und den Streckenmesseinrichtungen der mobilen Kommunikationseinrichtungen, welche als Standardabweichungen vorliegen, vorgegeben werden. Der Schwellenwert kann Null sein; in der Praxis wird er aber Werte annehmen, die größer als Null sind.

Das oben genannte technische Problem wird ebenfalls durch ein Computerprogramm gelöst, welches eine Vielzahl von Anweisungen enthält, die zumindest in einer mobilen Kommunikationseinrichtung speicherbar sind, wobei die Anweisung, wenn sie von einer Auswerte- und Steuereinrichtung der mobilen Kommunikationseinrichtung ausgelesen und verarbeitet werden, das Verfahren nach einem der Ansprüche 1 bis 13 ausführen.

Die Erfindung wird nachfolgen anhand eines Ausführungsbeispiels in Verbindung mit den beiliegenden Zeichnungen näher erläutert. Es zeigen:

Fig. 1    zwei mobile Kommunikationseinrichtungen eines beispielhaften drahtlosen Kommunikationssystems, in welchem die Erfindung verwirklicht wird,

Fig. 2    eine grafische Darstellung der sich bewegenden mobilen Kommunikationseinrichtung, die in Fig. 1 gezeigt sind,

Fig. 3    zwei Grafiken A) und B), welche die Gültigkeit der Berechnung der betragsmäßig maximalen Streckenänderung zwischen den beiden in Fig. 1 gezeigten mobilen Kommunikationseinrichtung erläutern,

Fig. 4    eine Grafik C), welche die Gültigkeit der Berechnung der betragsmäßig maximalen Streckenänderung zwischen den beiden in Fig. 1 gezeigten mobilen Kommunikationseinrichtung erläutern,

Fig. 5    eine grafische Darstellung der sich bewegenden mobilen Kommunikationseinrichtungen, die in Fig. 1 gezeigt sind, wobei im Unterschied zu der in Fig. 2 gezeigten grafischen Darstellung Hindernisse dargestellt sind, und

Fig. 6    die in Fig. 5 gezeigte grafische Darstellung, wobei nunmehr auch vorwärts und rückwärts korrigierte Streckenmesswerte eingetragen sind.

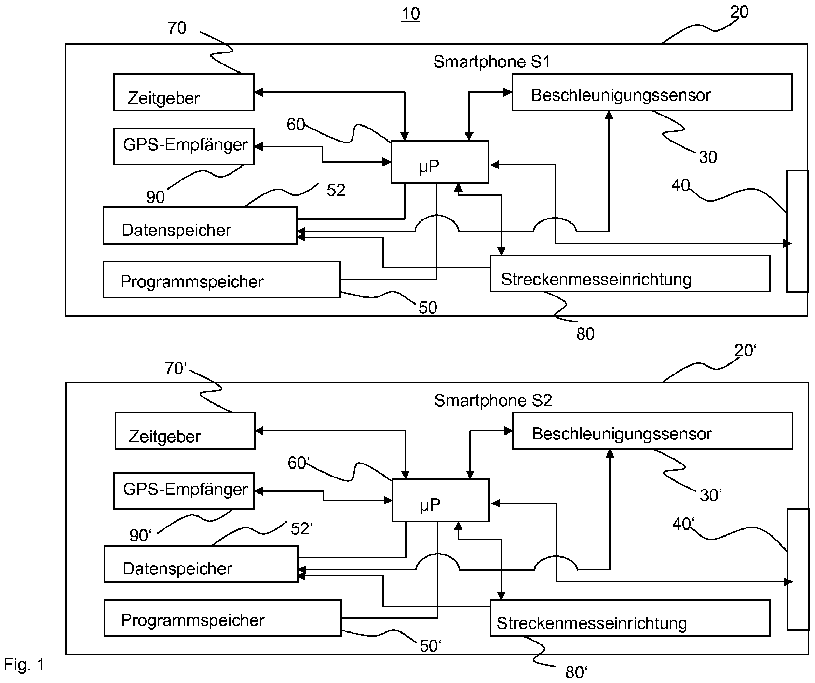

Fig. 1 zeigt ein beispielhaftes drahtloses Kommunikationssystem 10 zum Erkennen eines fehlerhaften Streckenmesswertes bei einer Streckenmessung zwischen einer ersten mobilen Kommunikationseinrichtung 20 und einer zweiten mobilen Kommunikationseinrichtung 20', wobei die zweite mobile Kommunikationseinrichtung 20' temporär auch als stationäre Einrichtung fungieren kann. Lediglich der besseren Übersichtlichkeit halber sind nur die beiden mobilen Kommunikationseinrichtungen 20 und 20' gezeigt. Angemerkt sei deshalb, dass beide mobile Kommunikationseinrichtungen 20 und 20' jeweils Streckenmessungen zu mehreren mobilen Kommunikationseinrichtungen und/oder stationären Einrichtungen, wie zum Beispiel drahtlose WLAN-Zugangspunkte, durchführen und auf Streckenmessfehler hin prüfen können. Vorteilhafter Weise handelt es sich bei mobilen Kommunikationseinrichtungen 20 und 20' um entsprechend ausgebildete Smartphones, die in den Figuren 1 bis 6 mit S1 bzw. S2 bezeichnet sind.

Das drahtlose Kommunikationssystem 10 kann ein Mobilfunksystem, ein WLAN-basiertes Kommunikationssystem oder auch eine Kombination aus beiden sein. Die in Fig. 1 dargestellten mobilen Kommunikationseinrichtungen 20 und 20' enthalten lediglich der einfachen Darstellung wegen nur die Merkmale, die zur Erläuterung der Erfindung hilfreich sind. Angemerkt sei, dass im gezeigten Beispiel die beiden mobilen Kommunikationseinrichtungen 20 und 20' identisch oder ähnlich aufgebaut sind.

Das Smartphone 20 enthält wenigstens eine drahtlose Kommunikationsschnittstelle 40, über die es mittelbar oder direkt mit anderen mobilen Kommunikationseinrichtungen, beispielsweise dem Smartphone 20' kommunizieren und Daten austauschen kann. Lediglich beispielhaft sei angenommen, dass es sich bei der Kommunikationsschnittstelle 40 um eine Bluetooth-Schnittstelle, Wi-Fi Direct-fähige oder LTE Direct-fähige Schnittstelle handeln kann. Weiterhin weist das Smartphone 20 als Messeinrichtung 30 eine Beschleunigungsmesseinrichtung beziehungsweise einen Beschleunigungssensor zur Bestimmung von Positionsänderungen auf. Als Beschleunigungssensor können auch herkömmliche Beschleunigungssensoren eingesetzt werden. Ferner ist im Smartphone 20 eine Streckenmesseinrichtung 80 vorgesehen, mit der die Strecke zum Beispiel zwischen dem Smartphone 20 und dem Smartphone 20' gemessen werden kann. Die Streckenmesseinrichtung 80 kann dazu ausgebildet sein, eine RSS (Received Signal Strength)-basierte Streckenmessung oder eine auf einer Laufzeitmessung basierte Streckenmessung zwischen der mobilen Kommunikationseinrichtung 20 und zum Beispiel dem Smartphone 20' durchzuführen. Zur Laufzeitmessung kann zum Beispiel das spezielle Laufzeitmessverfahren RTT (Round Trip Time) angewendet werden. Vorzugsweise enthält die Streckenmesseinrichtung 80 hierzu einen geeigneten Messchipbaustein. Natürlich kann die Streckenmesseinrichtung 20 auch andere geeignete Chips zur Streckenmessung enthalten. Weiterhin ist ein Zeitgeber 70 vorgesehen, der unter anderem dazu dient,

i) den Beschleunigungssensor 30 vorzugsweise zu mehreren aufeinanderfolgenden Zeitpunkten zu triggern, um relative Positionskoordinatenänderungen des Smartphones 20 zwischen zwei Zeitpunkten über einen längeren Beobachtungszeitraum zu beobachten bzw. zu messen, und

ii) die Streckenmesseinrichtung 80 vorzugsweise zu mehreren aufeinanderfolgenden Zeitpunkten zu triggern, um die Strecke zwischen dem Smartphone 20 und zum Beispiel dem Smartphone 20' über einen längeren Beobachtungszeitraum zu beobachten bzw. messen. Der zeitliche Abstand zwischen jeweils zwei aufeinanderfolgenden Zeitpunkten und der Beobachtungszeitraum kann je nach Implementierung zum Beispiel am Smartphone 20 von einem Benutzer eingestellt werden.

Die vom Beschleunigungssensor 30 gemessenen relativen Positionskoordinatenänderungen können in einem Datenspeicher 52 abgelegt werden. Weiterhin ist ein Programmspeicher 50 vorgesehen, in welchem ein Programm zum Berechnen von Abstandsänderungen, insbesondere zum Berechnen von betragsmäßig maximalen Abstandsänderungen, zwischen wenigstens den beiden mobilen Kommunikationseinrichtungen 20 und 20' oder zwischen der mobilen Kommunikationseinrichtung 20 und einer stationären Einrichtung abgelegt werden kann. Weiterhin sind in dem Programmspeicher 50 Anweisungen zum Erkennen eines fehlerhaften Streckenmesswertes bei einer Streckenmessung zwischen der mobilen Kommunikationseinrichtung 20 und wenigstens einer mobilen Kommunikationseinrichtung, wie zum Beispiel der mobilen Kommunikationseinrichtung 20', und/oder wenigstens einer stationären Einrichtung gespeichert. Zudem ist eine Auswerte- und Steuereinrichtung 60 implementiert, die die Funktionen und den Betrieb des Smartphones 20 überwacht und steuert. Hierzu ist die Auswerte- und Steuereinrichtung 60 mit dem Beschleunigungssensor 30, der Streckenmesseinrichtung 80, dem Zeitgeber 70, dem Datenspeicher 52, dem Programmspeicher 50 und der drahtlosen Kommunikationsschnittstelle 40 verbunden. Die Auswerte- und Steuereinrichtung 60 kann als Mikrocontroller oder Mikroprozessor ausgebildet sein. Neben den beschriebenen Komponenten kann das Smartphone 20 auch über einen GPS-Empfänger 90 verfügen.

In ähnlicher Weise enthält das Smartphone 20' wenigstens eine drahtlose Kommunikationsschnittstelle 40', über die es mittelbar oder direkt mit anderen mobilen Kommunikationseinrichtungen, beispielsweise dem Smartphone 20 kommunizieren und Daten austauschen kann. Lediglich beispielhaft sei angenommen, dass es sich bei der Kommunikationsschnittstelle 40' um eine Bluetooth-Schnittstelle, Wi-Fi Direct-fähige oder LTE Direct-fähige Schnittstelle handeln kann. Weiterhin weist das Smartphone 20' als Messeinrichtung 30' eine Beschleunigungsmesseinrichtung beziehungsweise einen Beschleunigungssensor auf. Als Beschleunigungssensor können auch herkömmliche Beschleunigungssensoren eingesetzt werden. Ferner ist im Smartphone 20' eine Streckenmesseinrichtung 80' vorgesehen, mit der die Strecke zum Beispiel zwischen dem Smartphone 20 und dem Smartphone 20' gemessen werden kann. Die Streckenmesseinrichtung 80' kann dazu ausgebildet sein, eine RSS (Received Signal Strength)-basierte Streckenmessung oder eine auf einer Laufzeitmessung (z. B. RTT (Round Trip Time)) basierte Streckenmessung zwischen der mobilen Kommunikationseinrichtung 20' und zum Beispiel dem Smartphone 20 durchzuführen. Vorzugsweise enthält die Streckenmesseinrichtung 80' hierzu einen geeigneten Messchipbaustein. Natürlich kann die Streckenmesseinrichtung 20' auch andere geeignete Chips zur Streckenmessung enthalten. Weiterhin ist ein Zeitgeber 70' vorgesehen, der unter anderem dazu dient,

i) den Beschleunigungssensor 30' vorzugsweise zu mehreren aufeinanderfolgenden Zeitpunkten zu triggern, um relative Positionskoordinatenänderungen des Smartphones 20' zwischen zwei Zeitpunkten über einen längeren Beobachtungszeitraum zu beobachten bzw. zu messen, und

ii) die Streckenmesseinrichtung 80' vorzugsweise zu mehreren aufeinanderfolgenden Zeitpunkten zu triggern, um die Strecke zwischen dem Smartphone 20' und zum Beispiel dem Smartphone 20 über einen längeren Beobachtungszeitraum zu beobachten bzw. messen. Der zeitliche Abstand zwischen jeweils zwei aufeinanderfolgenden Zeitpunkten und der Beobachtungszeitraum kann je nach Implementierung zum Beispiel im Smartphone' 20 von einem Benutzer eingegeben werden. Die vom Beschleunigungssensor 30' gemessenen relativen Positionskoordinatenänderungen können in einem Datenspeicher 52' abgelegt werden. Weiterhin ist ein Programmspeicher 50' vorgesehen, in welchem ein Programm zum Berechnen von Abstandsänderungen, insbesondere zum Berechnen von betragsmäßig maximalen Abstandsänderungen, zwischen wenigstens den beiden mobilen Kommunikationseinrichtungen 20 und 20' und/oder zwischen der mobilen Kommunikationseinrichtung 20' und wenigstens einer stationären Einrichtung abgelegt werden kann. Weiterhin sind in dem Programmspeicher 50' Anweisungen zum Erkennen eines fehlerhaften Streckenmesswertes bei einer Streckenmessung zwischen der mobilen Kommunikationseinrichtung 20' und wenigstens einer mobilen Kommunikationseinrichtung, wie zum Beispiel der mobilen Kommunikationseinrichtung 20, und/oder wenigstens einer stationären Einrichtung gespeichert. Zudem ist eine Auswerte- und Steuereinrichtung 60' implementiert, die die Funktionen und den Betrieb des Smartphones 20' überwacht und steuert. Hierzu ist die Auswerte- und Steuereinrichtung 60' mit dem Beschleunigungssensor 30', der Streckenmesseinrichtung 80', dem Zeitgeber 70', dem Datenspeicher 52', dem Programmspeicher 50' und der drahtlosen Kommunikationsschnittstelle 40' verbunden. Die Auswerte- und Steuereinrichtung 60' kann als Mikrocontroller oder Mikroprozessor ausgebildet sein. Neben den beschriebenen Komponenten kann das Smartphone 20' auch über einen GPS-Empfänger 90' verfügen.

Angemerkt sei an dieser Stelle noch, dass es sich bei den Beschleunigungssensoren 30 und 30' jeweils um eine Messeinrichtung handelt, die, ohne eine absolute Position zu kennen oder zu bestimmen, in der jeweiligen mobilen Kommunikationseinrichtung 20 bzw. 20' die Koordinatenfortschritte zwischen zwei Zeitpunkten bestimmt. Die Messeinrichtungen 30 und 30' können jeweils mehrere Messmethoden zur Bestimmung von Koordinatenfortschritten kombinieren, indem zum Beispiel Eingangssignale eines Beschleunigungsmessers und eines Kompasses, die die jeweilige Messeinrichtung bilden, verarbeitet werden.

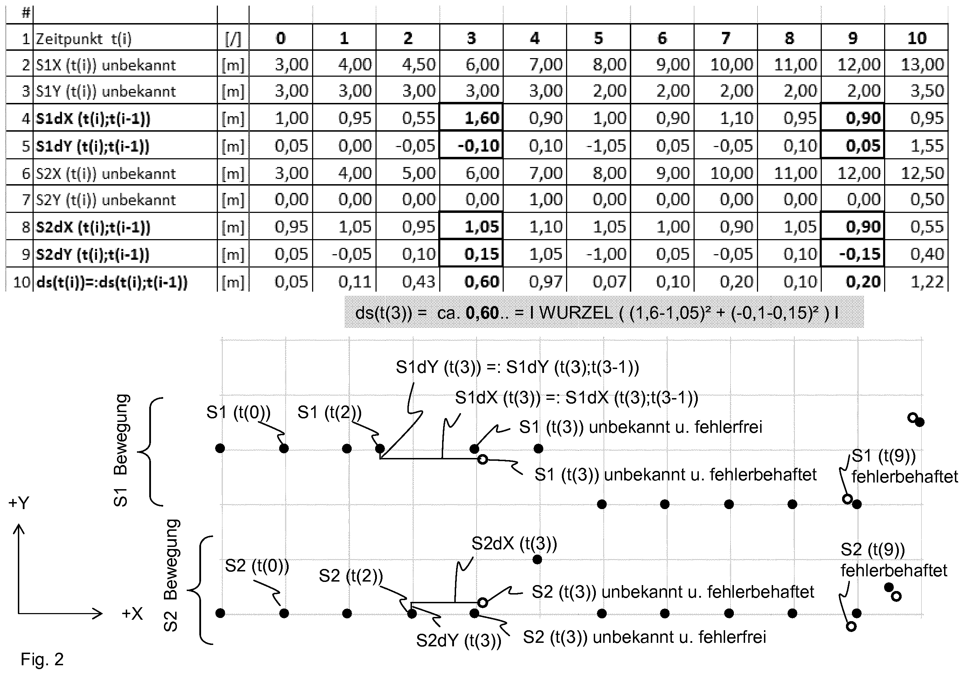

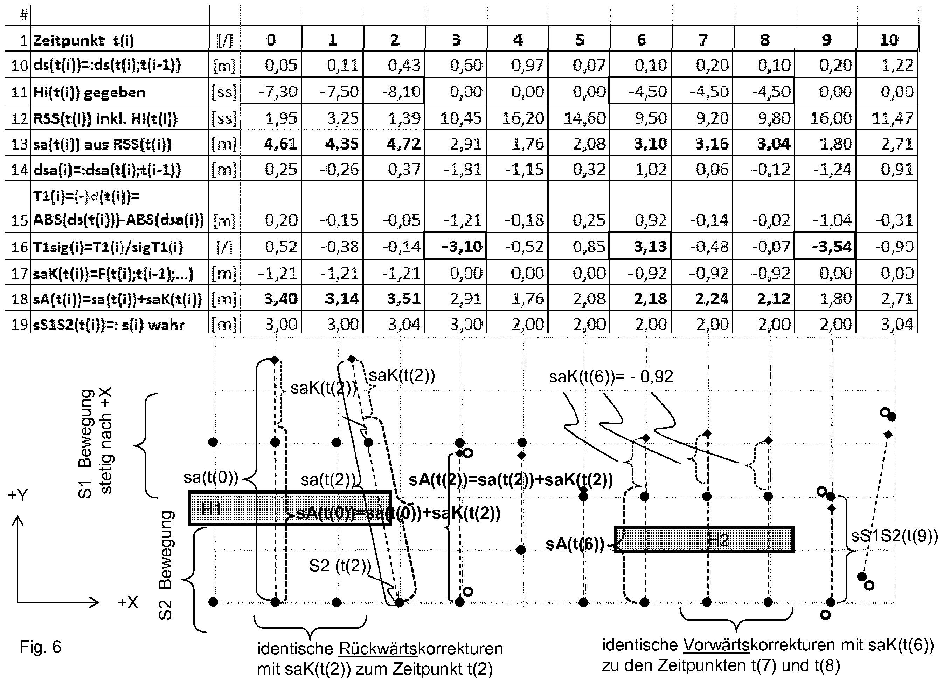

Nachfolgend wird die Funktionsweise des in Fig. 1 dargestellten drahtlosen Kommunikationssystems 10 in Verbindung mit den Fig. 2 und 6 näher erläutert.

Angenommen sei nunmehr, dass im Smartphone 20 das im Speicher 50 abgelegte Programm zum Erkennen eines fehlerhaften Streckenmesswerts bei einer Streckenmessung zwischen dem Smartphone 20 und dem Smartphone 20' ausgeführt werden soll. Das Verfahren soll zu einem Startzeitpunkt t(0), den der Benutzer des Smartphones vorgeben kann, beginnen.

Erläutert werden zunächst in Verbindung mit Fig. 2 die von der Auswerte- und Steuereinrichtung 60 des Smartphones 20 gesteuerten Verfahrensschritte

i) Ermitteln der relativen Positionskoordinatenänderung S1dX(t(i); t(i-1)) und S1dY(t(i); t(i-1)) der mobilen Kommunikationseinrichtung 20 zwischen jeweils zwei Zeitpunkten, nämlich einem Zeitpunkt t(i) und einem zeitlich früheren Zeitpunkt t(i-1), mit i=1, 2, 3, ...n;

ii) Ermitteln der relativen Positionskoordinatenänderung S2dX(t(i); t(i-1)) und S2dY(t(i); t(i-1)) der mobilen Kommunikationseinrichtung 20' zwischen jeweils zwei Zeitpunkten, nämlich einem Zeitpunkt t(i) und einem zeitlich früheren Zeitpunkt t(i-1), wobei i=1, 2, 3, ...n gilt;

iii) Ermitteln für mehrere Zeitpunkte t(i) vorzugsweise die betragsmäßig maximale Abstandsänderung ds(t(i); t(i-1)) zwischen den beiden Smartphones 20 und 20' in Abhängigkeit von der zwischen dem jeweiligen Zeitpunkt t(i) und dem früheren Zeitpunkt t(i-1) ermittelten Positionskoordinatenänderung des Smartphones 20 und in Abhängigkeit von der zwischen dem jeweiligen Zeitpunkt t(i) und dem früheren Zeitpunkt t(i-1) ermittelten Positionskoordinatenänderung des Smartphones 20'.

Angemerkt sei, dass die Schritte i) bis iii) ohne Berücksichtigung der absoluten Positionen der Smartphones 20 und 20' ausgeführt werden. Das heißt: Die absoluten Positionen sind entweder nicht bekannt, weil zum Beispiel die GPS-Empfänger 90 und 90' deaktiviert sind, oder sie werden, falls vorhanden, bei den Berechnungen einfach nicht als Eingangsgrößen verwendet.

Weiterhin sei angemerkt, dass, wenn anstelle des Smartphones 20' eine stationäre Einrichtung verwendet wird oder das Smartphone 20' vorübergehend als stationäre Einrichtung fungiert, Verfahrensschritt ii) nicht ausgeführt wird und in Schritt iii) die Abstandsänderung ds(t(i); t(i-1)) zwischen dem Smartphone 20 und der stationären Einrichtung 20' nur in Abhängigkeit von der zwischen dem jeweiligen Zeitpunkt t(i) und dem früheren Zeitpunkt t(i-1) ermittelten Positionskoordinatenänderung des Smartphones 20 ermittelt wird.

In der unteren Hälfte der Fig. 2 sind simulierte, beispielhafte 2-dimensionale horizontale Bewegungen der Smartphones 20 bzw. S1 und 20' bzw. S2 über einen Beobachtungszeitraum von t(0) bis t(10) gezeigt, wobei die unbekannten und fehlerfreien simulierten Positionen zu den diskreten Zeitpunkten t(i) durch schwarze Punkte dargestellt sind, während die unbekannten und fehlerbehafteten simulierten Positionen durch Kreise dargestellt sind. Die fehlerbehafteten Positionen sind durch Messungsungenauigkeiten der Beschleunigungssensoren 30 und 30' bedingt. Der besseren Lesbarkeit wegen sind in Fig. 2 unbekannte, fehlerbehaftete Positionen nur zu den Zeitpunkten t(3), t(9) und t(10) dargestellt. Angemerkt sei, dass der Beobachtungszeitraum sich auch über deutlich mehr Zeitpunkte erstrecken kann und/oder die Zeitabstände kleiner oder größer oder auch nicht äquidistant sein können.

In der oberen Hälfte der Fig. 2 ist eine Tabelle dargestellt, die folgende simulierte Situation widerspiegelt:

In Zeile 1 sind ein Startzeitpunkt t(0) und weitere Zeitpunkte t(i), mit i = 1 bis 10 dargestellt, zu denen der Beschleunigungssensor 30 des Smartphones 20 und der Beschleunigungssensor 30' des Smartphones 20' jeweils Positionskoordinatenänderungen messen sollen. Getriggert werden die Beschleunigungssensoren 30 und 30' durch den Mikroprozessor 60 bzw. durch den Mikroprozessor 60'. Die Mikroprozessoren 60 und 60' können wiederum durch den Zeitgeber 70 bzw. 70' angestoßen werden. In der Zeile 1 wird die dimensionslose Indizierung i der Zeitpunkte t(i) dargestellt, wobei die Zeitabstände zwischen jeweils zwei Zeitpunkten gleich oder unterschiedlich lang sein können. Für gleichlange Zeitabstände von 1 Sekunde würden für die Positionen der Smartphones S1 und S2 mittlere Geschwindigkeiten von ca. 1 Meter/Sekunde als mögliche Fußgängergeschwindigkeiten folgen.

Die Zeile 2 enthält die unbekannten x-Koordinaten der simulierten unbekannten und fehlerfreien Positionen des Smartphones 20 zu den jeweiligen Zeitpunkten t(0) bis t(10). Dies wird durch die Notation S1X(t(i)) angegeben.

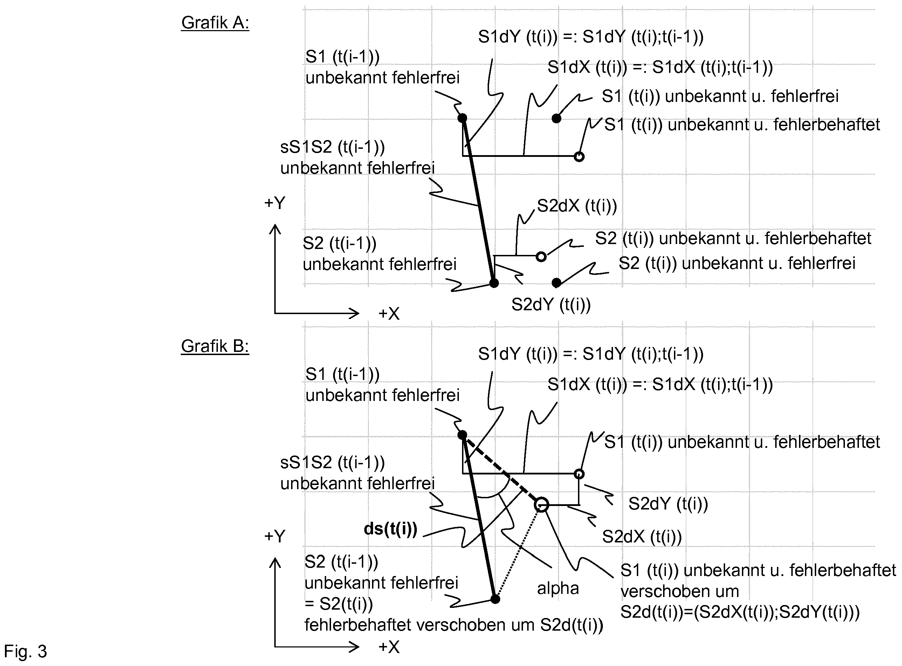

Die Zeile 3 enthält die unbekannten y-Koordinaten der unbekannten und fehlerfreien Positionen des Smartphones 20 zu den jeweiligen Zeitpunkten t(0) bis t(10). Dies wird durch die Notation S1Y(t(i)) angegeben. In Fig. 2 wird demzufolge ein Punkt S1(t(i)) durch die Koordinaten (S1X(t(i)); S1Y(t(i))) dargestellt. Diese Bezeichnung gilt auch für die Figuren 3 bis 6.

Die Zeile 4 enthält die vom Beschleunigungssensor 30 ermittelten Änderungen der x-Positionskoordinate zwischen einem Zeitpunkt t(i) und einem früheren Zeitpunkt t(i-1). Dies wird durch die Notation S1dx(t(i); t(i-1)) angegeben.

Die Zeile 5 enthält die vom Beschleunigungssensor 30 ermittelten Änderungen der y-Positionskoordinate zwischen einem Zeitpunkt t(i) und einem früheren Zeitpunkt t(i-1). Dies wird durch die Notation S1dy(t(i); t(i-1)) angegeben.

Die Zeile 6 enthält die unbekannten x-Koordinaten der unbekannten und fehlerfreien Positionen des Smartphones 20' zu den jeweiligen Zeitpunkten t(0) bis t(10). Dies wird durch die Notation S2X(t(i)) angegeben.

Die Zeile 7 enthält die unbekannten y-Koordinaten der unbekannten und fehlerfreien Positionen des Smartphones 20' zu den jeweiligen Zeitpunkten t(0) bis t(10). Dies wird durch die Notation S2Y(t(i)) angegeben. In Fig. 2 wird demzufolge ein Punkt S2(t(i)) durch die Koordinaten (S2X(t(i)); S2Y(t(i))) dargestellt. Diese Bezeichnung gilt auch für die Figuren 3 bis 6.

Die Zeile 8 enthält die vom Beschleunigungssensor 30' ermittelten Änderungen der x-Positionskoordinate zwischen einem Zeitpunkt t(i) und einem früheren Zeitpunkt t(i-1). Dies wird durch die Notation S2dx(t(i); t(i-1)) angegeben.

Die Zeile 9 enthält die vom Beschleunigungssensor 30' ermittelten Änderungen der y-Positionskoordinate zwischen einem Zeitpunkt t(i) und einem früheren Zeitpunkt t(i-1). Dies wird durch die Notation S2dy(t(i); t(i-1)) angegeben.

Die Zeile 10 enthält die vom Mikroprozessor 60 in Abhängigkeit von den Positionskoordinatenänderungen des Smartphones 20, welche in den Zeilen 4 und 5 eingetragen sind, und den Positionskoordinatenänderungen des Smartphones 20', welche in den Zeilen 8 und 9 eingetragen sind, berechneten, betragsmäßig maximalen Abstandsänderungen der unbekannten Strecke s zwischen den unbekannten Positionen des Smartphone 20 und des Smartphones 20' zum jeweiligen Zeitpunkt t(i) und zu jeweiligen früheren Zeitpunkt t(i-1). Dies wird durch die Notation ds(t(i))=:ds(t(i); t(i-1)) angegeben.

Den in der Tabelle enthaltenen Zahlen der Zeilen 2 bis 10 ist die Einheit m zugeordnet.

Für die Fehler der Beschleunigungsmesser 30 und 30' wurden beispielhafte Werte einer Standardabweichung von ca. 7 % der zurückgelegten Strecke gewählt und diese Fehler zusätzlich auf Inkremente von 0,05 Meter gerundet. Die Werte für S1dX, S1dY, S2dX und S2dY wurden aus den vorgegebenen unbekannten fehlerfreien Koordinaten eines vorherigen Zeitpunktes berechnet, indem die simulierten Fehler des jeweiligen Beschleunigungsmessers aufaddiert wurden.

Angenommen sei nunmehr, dass der Benutzer des Smartphones 20 eine beliebige, frei wählbare Startposition am Smartphone 20 eingibt oder dass dieses vom Computerprogramm erzeugt wird und dass diese Startposition zum Beispiel im Datenspeicher 52 abgelegt wird. Die Startposition wird im vorliegenden Beispiel durch einen beliebigen Punkt P1(X1; Y1) in einem X-Y-Koordinatensystem für einen beliebig wählbaren Zeitpunkt t(0) definiert. In ähnlicher Weise gibt der Benutzer des Smartphones 20' oder ein Computerprogramm eine beliebige, frei wählbare Startposition am Smartphone 20' vor, die zum Beispiel im Datenspeicher 52' abgelegt wird. Die Startposition sei wiederum durch einen beliebigen Punkt P2(X2; Y2) in einem XY-Koordinatensystem für den Zeitpunkt t(0) definiert. Zu beachten ist, dass diese beliebigen Startpunkte (nicht dargestellt) i. d. R. nicht der unbekannten, fehlerfreien Position (S1X(t(0)); S1Y(t(0))) des Smartphone 20 bzw. der unbekannten, fehlerfreien Position (S2X(t(0)); S2Y(t(0))) des Smartphone 20' entsprechen.

Weiterhin sei angenommen, dass der Benutzer des Smartphones 20 die relative Bewegung der Smartphones 20 und 20', d.h. die Abstandsänderungen der unbekannten Strecke zwischen den beiden Smartphones 20 und 20' zu mehreren Zeitpunkten beobachten möchte. Hierzu kann er ein im Programmspeicher 50 gespeichertes Anwendungsprogramm aufrufen. Unter Ansprechen auf das Anwendungsprogramm veranlasst der Mikroprozessor 60 den Beschleunigungsmesser 30, zum Zeitpunkt t(1) die Positionskoordinatenänderung bezüglich der Startposition des Smartphones 20 und ferner für weitere Zeitpunkte t(i), mit i=2, 3, ...n, jeweils eine Positionskoordinatenänderung bezüglich der Positionskoordinaten des Smartphones 20 eines früheren Zeitpunktes t(i-1) zu ermitteln. Angemerkt sei, dass der Mikroprozessor 60 dazu ausgebildet sein kann, nach jeder Ermittlung einer Positionskoordinatenänderung die Positionskoordinaten X und Y wieder auf den anfangs gewählten Startpunkt zurück zu setzten. Auf diese Weise wird jede Positionskoordinatenänderung bezüglich eines Startpunktes ermittelt.

Die ermittelten Positionskoordinatenänderungen hinsichtlich des Smartphones 20 sind in den Zeilen 4 und 5 der in Fig. 2 gezeigten Tabelle eingetragen. Diese Positionskoordinatenänderungen werden zusammen mit den dazugehörenden Zeitpunkten vorzugsweise im Datenspeicher 52 abgelegt. Unter Ansprechen auf das Anwendungsprogramm veranlasst der Mikroprozessor 60 zudem den Beschleunigungsmesser 30', zum Zeitpunkt t(1) die Positionskoordinatenänderung bezüglich der Startposition des Smartphones 20' und ferner für die weiteren Zeitpunkte t(i), mit i=2, 3, ...n jeweils eine Positionskoordinatenänderung bezüglich der Positionskoordinaten des Smartphones 20' eines früheren Zeitpunktes t(i-1) zu ermitteln. Angemerkt sei, dass der Mikroprozessor 60' dazu ausgebildet sein kann, nach jeder Ermittlung einer Positionskoordinatenänderung die Positionskoordinaten X und Y wieder auf den anfangs gewählten Startpunkt zurück zu setzten. Auf diese Weise wird jede Positionskoordinatenänderung bezüglich des Startpunktes ermittelt. Alternativ werden bei jeder Ermittlung der Positionskoordinatenänderung Positionskoordinaten X, Y als Bezugsgrößen verwendet, die sich jeweils um die zuvor berechneten Änderungen der Positionskoordinaten X und Y verändern. Die ermittelten Positionskoordinatenänderungen hinsichtlich des Smartphones 20' sind in den Zeilen 8 und 9 der in Fig. 2 gezeigten Tabelle eingetragen. Diese Positionskoordinatenänderungen werden zusammen mit den dazugehörenden Zeitpunkten vorzugsweise im Datenspeicher 52' abgelegt und zum Smartphone 20 übertragen. Dort werden sie im Datenspeicher 52 abgelegt.

Anhand der Spalte 6 und den Zeilen 4 und 5 der in Fig. 2 gezeigten Tabelle wird erläutert, wie der Mikroprozessor 60 eine Abstandsänderung zwischen den Smartphones 20 und 20' während des Zeitpunktes t(3) und t(3-1=2) berechnet. Tatsächlich, im Sinne der Simulation, bewege sich das Smartphone 20 während der Zeitpunkte t(2) und t(3) vom Punkt (x=4,5; y=3) zum Punkt (x=6; y= 3). Diese beiden unbekannten und fehlerfreien Punkte sind in Fig. 2 als S1(t2)) und S1(t(3)) dargestellt. Die vom Beschleunigungssensor 30 hierzu ermittelten fehlerbehafteten Positionskoordinatenänderungen betragen 1,6 bzw. -0,1, wie aus den Zeilen 4 und 5 ersichtlich. Dieser Sachverhalt ist in Fig. 2 durch eine horizontale und vertikale Linie illustriert, welche den Punkt S1(t(2)) mit dem unbekannten und fehlerbehafteten Punkt S1(t(3)) verbinden.

In Verbindung mit Spalte 6 und den Zeilen 8 und 9 der in Fig. 2 gezeigten Tabelle wird nunmehr erläutert, wie der Mikroprozessor 60 eine Abstandsänderung zwischen den Smartphones 20 und 20' während des Zeitpunktes t(3) und t(3-1=2) berechnet. Tatsächlich, im Sinne der Simulation, bewege sich das Smartphone 20' während der Zeitpunkte t(2) und t(3) vom Punkt (x=5; y=0) zum Punkt (x=6; y= 0). Diese beiden unbekannten und fehlerfreien Punkte sind in Fig. 2 als S2(t2)) und S2(t(3)) dargestellt. Die vom Beschleunigungssensor 30' hierzu ermittelten fehlerbehafteten Positionskoordinatenänderungen betragen 1,05 bzw. 0,15, wie aus den Zeilen 8 und 9 ersichtlich. Dieser Sachverhalt ist in Fig. 2 durch eine horizontale und vertikale Linie illustriert, welche den Punkt S2(t(2)) mit dem unbekannten und fehlerbehafteten Punkt S2(t(3)) verbinden.

Der Mikroprozessor 60 berechnet die betragsmäßig maximale Abstandsänderung zwischen den Smartphones 20 und 20' während zweier Zeitpunkte t(i) und t(i-1) gemäß der Gleichung:

$$ds(t(i)) = |Wurzel((S1dX(t(i))-S2dX(t(i)))^2 +$$
$$(S1dY(t(i))-S2dY(t(i)))^2)|,$$

wobei

ds(t(i))=:ds(t(i); t(i-1)),
S1dX(t(i))=:S1dX(t(i)); t(i-1))
S1dY(t(i))=:S1dY(t(i)); t(i-1))
S21dX(t(i))=:S2dX(t(i)); t(i-1)) und
S21dY(t(i))=:S21dY(t(i)); t(i-1)).

Folglich berechnet der Mikroprozessor 60 die betragsmäßig maximale Abstandsänderung zwischen den Smartphones 20 und 20' während der Zeitpunkte t(2) und t(3) zu

$$ds(t(3)) = |Wurzel(1,6-1,05)^2 + (-01-0,15)^2| = ca. 0,6.$$

Eine ähnliche Situation ist in der Fig. 2 für den Zeitpunkt t(9) dargestellt. Für den Zeitpunkt t(9) berechnet der Mikroprozessor 60 eine betragsmäßig maximale Abstandsänderung $ds(t(9)) \approx 0,2$.

Festzuhalten ist, dass in den Smartphones 20 und 20' jeweils ein Synchronisationsprogramm gespeichert werden kann, welches von der jeweiligen Auswerte- und Steuereinrichtung 60 bzw. 60' ausgeführt werden kann, um sicherzustellen, dass die Zeitgeber 70 und 70' synchron zueinander laufen.

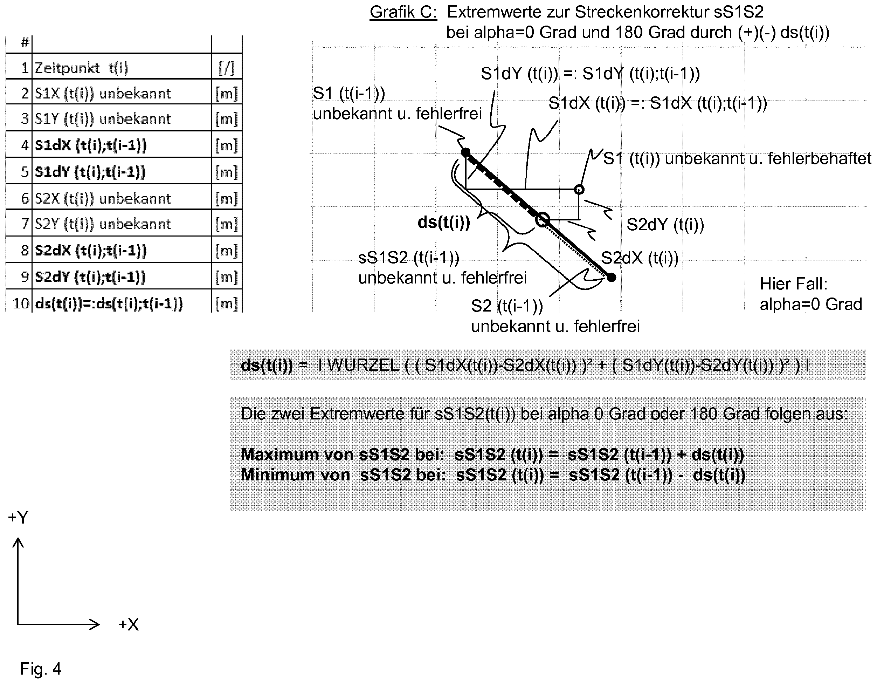

Dass die betragsmäßig maximale Abstandsänderung ds(t(i)) der unbekannten Strecke zwischen den Smartphones 20 und 20' gemäß der oben genannten Gleichung berechnet werden kann, wird anhand der Fig. 3 und 4 bewiesen.

Die Grafik A der Fig. 3 zeigt einen vergrößerten Ausschnitt zweier absoluter, unbekannter Positionen des Smartphones 20 und des Smartphones 20' zu einem Zeitpunkt t(i-1) sowie die unbekannten fehlerfreien Positionen des Smartphones 20 und des Smartphones 20' jeweils zum Zeitpunkt t(i). Weiterhin ist in der Grafik A die unbekannte, fehlerbehaftete Position des Smartphones 20 und die unbekannte, fehlerbehaftete Position des Smartphones 20' jeweils durch einen Kreis zum Zeitpunkt t(i) dargestellt. Die von den Beschleunigungssensoren 30 beziehungsweise 30' berechneten Positionskoordinatenänderungen sind in der Grafik A durch die jeweiligen horizontalen und vertikalen Strecken dargestellt. Die fehlerbehafteten unbekannten Positionen der Smartphones 20 und 20' ergeben sich aus fehlerbehafteten Messungen der Beschleunigungssensoren 30 und 30'. Die unbekannte, fehlerfreie Strecke sS1S2(t(i)) zwischen dem Smartphone 20 und dem Smartphone 20' zum Zeitpunkt t(i) ist durch eine in Fettdruck gezeichnete Linie dargestellt.

Werden die unbekannten, fehlerfreien Punkte S1(t(i)) und S2(t(i)) um den Vektor S2d(t(i)) = (S2dX(t(i)); S2dY(t(i))), der der Positionskoordinatenänderung zum Zeitpunkt t(i) entspricht, verschoben, hebt sich die Positionskoordinatenänderung S2dX(t(i)) und S2dY(t(i)) hinsichtlich des Punktes S2(t(i)) auf und die Abstandsänderung ds(t(i)) wird allein durch den Punkt S1(t(i)), S2d(t(i) und S1d(t(i)) = (S1dX(t(i)); S1dY(t(i))) dargestellt. Mit anderen Worten: Durch die Verschiebung aller Punkte S1(t(i)) und S2(t(i)) um S2d(t(i)) ändert sich die Streckenlänge zwischen zwei Punkten nicht, also auch die Streckenlänge ds(t(i)) nicht. Dieser Sachverhalt ergibt sich aus der Grafik B.

Ein Vergleich der Fig. 3 und 4 zeigt, dass, wenn der Winkel $\alpha$ (Bezeichnung alpha in den Grafiken), der von der Streckenlänge sS1S2(t(i)) zwischen den Smartphones 20 und 20' und der betragsmäßig maximalen Abstandsänderung ds(t(i)), dargestellt durch die gestrichelte Linie, eingeschlossen wird, 0 Grad oder 180 Grad ist, die maximale Streckenlängenänderung gegeben ist durch

$$sS1S2(t(i)) = sS1S2(t(i-1)) - ds(t(i)) \; bzw.$$

durch

$$sS1S2(t(i)) = sS1S2(t(i-1)) + ds(t(i)).$$

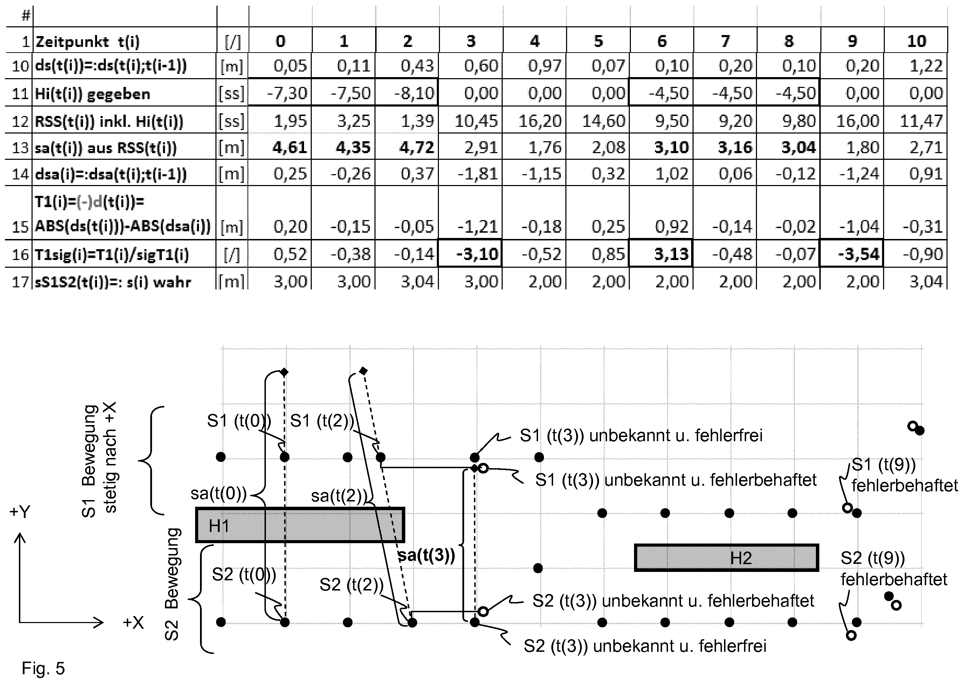

Die Erläuterung des simulierten Szenarios wird nunmehr anhand der Fig. 5 und 6 fortgesetzt.

In der oberen Hälfte der Fig. 5 ist eine Tabelle dargestellt, die folgende simulierte Situation widerspiegelt:

Die erste Zeile entspricht der Zeile 1 der Tabelle gemäß Fig. 2, während die zweite Zeile der Zeile 10 der Tabelle gemäß Fig. 2 entspricht. Die Zeitpunkte t(0) bis t(10) legen die Zeitpunkte fest, zu denen die Streckenmesseinrichtung 80 des Smartphones 20 die Strecke zwischen den beiden Smartphones 20 und 20' messen soll. Getriggert wird die Streckenmesseinrichtung 80 durch den Mikroprozessor 60. Der Mikroprozessor 60 kann wiederum durch den Zeitgeber 70 angestoßen werden.

Die Fig. 5 unterscheidet sich von der Fig. 2 unter anderem darin, dass nunmehr zwischen den beiden mobilen Kommunikationseinrichtungen 20 bzw. S1 und 20' bzw. S2 zwei Hindernisse H1 und H2 auftreten, die sich bei der Streckenmessung aufgrund der beispielhaft verwendeten Streckenmessmethode und der Dämpfungseigenschaften der Hindernisse als fehlerhaft, zu große Streckenmessungen bemerkbar machen.

Zeile 11 enthält simulierte Dämpfungswerte Hi(t(i)) hinsichtlich der beiden Hindernisse H1 und H2, die sich bei der Streckenmessung durch diese Hindernisse als Streckenverlängerungen bemerkbar machen. Zu den Zeitpunkten t(3) bis t(5) sowie t(9) und t(10) besteht zwischen den Smartphones 20 und 20' freie Sicht, was durch den Dämpfungswert 0 wiedergegeben ist. Zeile 11 zeigt ferner, dass zwischen den Zeitpunkten t(1) und t(2) der Dämpfungswert deutlich ansteigt. Dieser simulierte Sprung beschreibt die Tatsache, dass die beiden Smartphones 20 und 20' sich in x-Richtung unterschiedlich schnell fortbewegt haben und somit die Streckenmessung zum Zeitpunkt t(2) schräg und nicht mehr senkrecht zum Hindernis H1 durchgeführt wird. Mit anderen Worten: Das von dem Smartphone 20' ausgesendete und vom Smartphone zur Streckenmessung empfangene Signal erfährt eine größere Dämpfung als zum Zeitpunkt t(1). Zeile 11 verrät weiter, dass die Dämpfung des Hindernisses H2 größer als die Dämpfung des Hindernisses H2 ist. In den Beispielen der simulierten Dämpfungen der Hindernisse wurde unterstellt, dass die Dämpfungseigenschaften jedes der Hindernisse H1 und H2 in jedem Punkt nahezu identisch sind und somit die jeweilige Länge der Wegstrecke durch das Hindernis den Gesamtdämpfungswert bei einer Streckenmessung beeinflusst.

Zeile 12 enthält die zu den Zeitpunkten t(0) bis t(10) von der Streckenmesseinrichtung 80 gemessene empfangene Signalstärke RSS (t(i)) eines vom Smartphone 20' ausgesendeten Signals bekannter Sendesignalstärke, wobei die Dämpfung durch die Hindernisse H1 und H2 mit berücksichtigt sind. Angemerkt sei, dass die beiden Smartphones 20 bzw. S1 und 20' bzw. S2 ihre jeweilige aktuell verwendete Sendeleistung vorab miteinander austauschen können.

Zeile 13 enthält die von der Streckenmesseinrichtung 80 aus den empfangenen Signalstärken RSS (t(i)) ermittelten Streckenmesswerte sa(t(i)) zu den Zeitpunkten t(0) bis t(10). Diese Werte können im Datenspeicher 52 abgelegt werden. Aus Zeile 13 wird deutlich, dass aufgrund der Signaldämpfung durch der Hindernisse H1 und H2 die Streckenmesseinrichtung 80 zu den Zeitpunkten t(0) bis t(2) und t(6) bis t(8) fehlerhafte, das heißt zu große Strecken misst. Für den Zusammenhang der Werte sa(t(i)) als Funktion der empfangenen RSS(t(i)) Werte wurde in allen Simulationen aller Grafiken und Tabellen die gleiche Funktion vorgegeben und genutzt und auch als inverse Funktion zur Bestimmung von simulierten fehlerfreien und hindernisfreien RSS Werten genutzt. Die zufälligen RSS Fehler wurden aus einer Normalverteilung mit sigma 8 % des Absolutwertes angesetzt. Als Simulationsfunktion wurde die Funktion sa(t(i))=-0,2*RSS(t(i))+5 als eine erste einfache Näherung genommen.

Zeile 14 enthält erste Differenzwerte für die Zeitpunkte t(0) bis t(10), die durch die Notation dsa(i)=: dsa(t(i); t(i-1)) definiert sind. Die Auswerte- und Steuereinrichtung 60 ist dazu ausgebildet, für jeden Zeitpunkt t(i), mit i=1, 2, 3, ...n, aus dem zum Zeitpunkt t (i) gemessenen Streckenmesswert sa(t(i)) und dem zum Zeitpunkt t(i-1) gemessenen Streckenmesswert sa(t(i-1)) den dazugehörenden ersten Differenzwert dsa(i) zu berechnen. Im gezeigten Beispiel ist n=10. Auch die ersten Differenzwerte können im Datenspeicher 52 abgelegt werden.

Zeile 15 enthält zweite Differenzwerte T1 gemäß der Notation T(i)=ABS(ds(t(i)))-ABS(dsa(i))), welche von der Auswerte- und Steuereinrichtung 80 berechnet werden können. Hierzu bildet die Auswerte- und Steuereinrichtung 80 in vorteilhafter Weise für jeden Zeitpunkt t(i) den Absolutwert der in Zeile 10 enthaltenen Abstandsänderung (Zeile 10), die zwischen dem Zeitpunkt t(i) und dem früheren Zeitpunkt t(i-1) berechnet wurde, den Absolutwert des ersten Differenzwertes (Zeile 14) zum Zeitpunkt t(i), und anschließend einen zweiten Differenzwert für jeden Zeitpunkt t(i). Die Auswerte- und Steuereinrichtung 80 prüft anschließend, ob der zu einem Zeitpunkt t(i) berechnete zweite Differenzwert T1(i) betragsmäßig größer als ein vorbestimmter Schwellenwert ist, um einen fehlerhaften Streckenmesswert, zum Beispiel aufgrund der Hindernisse H1 und H2, zu erkennen. Auch die zweiten Differenzwerte können im Datenspeicher 52 abgelegt werden.

Eine zuverlässigere Aussage über einen fehlerhaften Streckenmesswert kann getroffen werden, wenn die Auswerte- und Steuereinrichtung 80 für jeden Zeitpunkt t(i) die Standardabweichung der zweiten Differenzwerte T1(i) berechnet und dann den Quotienten T1sig(i) aus den zweiten Differenzwerten T1(i) und deren Standardabweichung sigT1(i) berechnet. Diese auf die Standardabweichung bezogenen zweiten Differenzwerte T1sig(i)=T1(i)/sigT1(i) stehen in Zeile 16 und können ebenfalls im Datenspeicher 52 abgelegt werden.

Die Standardabweichung kann unter der Annahme normalverteilter Beobachtungen z. B. mittels des bekannten Fehlerfortpflanzungsgesetzes für normalverteilte Größen berechnet werden, was hier in allen vorliegenden Simulationen geschehen ist. Hierbei werden systembedingte zufällige Fehler der Streckenmesseinrichtung 80 und der Beschleunigungssensoren 30 und 30' berücksichtigt. Unter diesen Randbedingungen wurde der Schwellenwert auf 3 gesetzt, was einer Schwelle von 3 sigma entspricht und statistisch als mindestens eine ca. 99 %-tig richtige Entscheidung auf eine falsche Streckendifferenz gut gedeutet werden kann, wenn der Schwellwert 3 nur minimal überschritten wird.

Um nunmehr fehlerhafte Streckenmesswerte aufdecken zu können, prüft die Auswerte- und Steuereinrichtung 80, ob der zu einem Zeitpunkt t(i), mit i=1, 2, 3, ...n, berechnete zweite Differenzwert, im vorliegenden Beispiel T1sig(i) größer als der vorbestimmte Schwellenwert von 3 ist. Wie aus Zeile 16 ersichtlich, überschreiten die zweiten Differenzwerte T1sig(3), T1sig(6) und T1sig(9) den Schwellenwert, was auf fehlerhafte Streckenmesswerte sa(t(i)) hinweist, die zu den Zeitpunkten t(i), mit i=3, i=6 und/oder i=9, und/oder dem jeweiligen vorherigen Zeitpunkt t(i-1) falsch sein können, also zu i=3-1=2, i=5 und/oder i=8. Im Weiteren wird noch erläutert, dass dieses auch auf weitere fehlerhafte Streckenmessungen zu weiteren anderen Zeitpunkten hindeuten kann, was zeitversetzt analog geprüft werden kann.

Wie hinsichtlich Zeile 13 bereits festgestellt, hat die Streckenmesseinrichtung 80 zu den Zeitpunkten t(0) bis t(2) und t(6) bis t(8) fehlerhafte, das heißt zu große Strecken aufgrund der Signaldämpfung durch die Hindernisse H1 und H2 gemessen.

Diese fehlerhaften Streckenmessungen zwischen den beiden Smartphones 20 und 20' bzw. S1 und S2 sind in Fig. 6 durch rautenförmige Symbole schematisch dargestellt.

Um fehlerhafte Streckenmessungen nicht nur erkennen, sondern auch korrigieren zu können, kann die Auswert- und Steuereinrichtung 80 das Vorzeichen der in den Zeilen 15 oder 16 enthaltenen zweiten Differenzwerten T1(i) bzw.

T1sig(i) erkennen und anhand des erkannten Vorzeichens ermitteln, welche und gegebenenfalls wie viele fehlerhafte Streckenmessungen korrigiert werden können. Allgemein gesprochen kann, wenn der zu einem Zeitpunkt t(i) berechnete zweite Differenzwert, im betrachteten Beispiel der Wert T1sig(i) aus Zeile 16, betragsmäßig größer als der Schwellenwert 3 ist und ein negatives Vorzeichen besitzt, wenigstens ein zu einem früheren Zeitpunkt t(i-k) ermittelter Streckenmesswert sa(t(i-k)), mit k größer oder gleich 1 korrigiert werden. Und wenn der zu einem Zeitpunkt t(i) berechnete zweite Differenzwert, im betrachteten Beispiel der Wert T1sig(i) aus Zeile 16, betragsmäßig größer als der Schwellenwert 3 ist und ein positives Vorzeichen besitzt, kann der zum jeweiligen Zeitpunkt t(i) ermittelte Streckenmesswert sa(t(i)) und wenigstens ein zu einem späteren Zeitpunkt t(i+k) ermittelter Streckenmesswert sa(t(i+k), mit k größer oder gleich 1 korrigiert werden.

Da die zweiten Differenzwerte T1sig(i) aus Zeile 16 im Datenspeicher 52 abgelegt sind, kennt die Auswerte- und Steuereinrichtung 80 auch die auf die Standardabweichung bezogenen zweiten Differenzwerte T1sig(3)=-3,1 sowie T1sig(6)=3,13 und T1sig(9)=-3,54. Das positive Vorzeichen von T1sig(6) signalisiert der Auswerte- und Steuereinrichtung 80, dass sich das Hindernis H2 zwischen dem Smartphone 20 und dem Smartphone 20' befindet und somit der zum Zeitpunkt t(6) gemessene Streckenmesswert sa(t(6)) und gegebenenfalls zumindest ein zeitlich später gemessener Streckenmesswert sa(t(6+1=7)) aufgrund des Hindernisses H2 fehlerhaft sind und durch eine Vorwärtskorrektur korrigiert werden könnte.

Das negative Vorzeichen von T1sig(9) signalisiert der Auswerte- und Steuereinrichtung 80, dass die Smartphones 20 und 20' das Hindernis H2 wieder passiert haben, und somit zumindest ein zeitlich früher gemessener Streckenmesswert sa(9-1=8) aufgrund des Hindernisses H2 fehlerhaft ist und gemäß einer Rückwärtskorrektur korrigiert werden könnte oder eine fortlaufende Vorwärtskorrektur seit t(i=6) bei t(i=8) endet. Anhand der beiden Werte T1sig(6)=3,13 und T1sig(9)=-3,54 und der detektierten massiven Unterschreitung des Schwellwertes 3 bei t(i=7) und t(i=8) ist die Auswerte- und Steuereinrichtung 80 weiter in der Lage, zu erkennen, dass die Streckenmesswerte zu den Zeitpunkte t(6) bis t(8) fehlerhaft sind. Mit anderen Worten: Die Auswerte- und Steuereinrichtung 80 kann anhand der in Zeile 16 bzw. 15 enthaltenen Werte erkennen, wann eine Streckenmessung aufgrund eines Hindernisses fehlerhaft ist, und ob die fehlerhaften Streckenmessungen von einem maßgeblichen Zeitpunkt t(i) an rückwärts, d.h. in die Vergangenheit korrigiert werden können, oder vorwärts korrigiert werden können, indem auch zukünftige Streckenmesswerte korrigiert werden können.

Das negative Vorzeichen von T1sig(3) signalisiert der Auswerte- und Steuereinrichtung 80, dass die Smartphones 20 und 20' das Hindernis H1 passiert haben, und somit zumindest ein zeitlich früher gemessener Streckenmesswert sa(3-1=2) aufgrund des Hindernisses H1 fehlerhaft ist, obwohl das Hindernis H1 dem Auswertesystem hierzu nicht bekannt sein muss, da eine zu lang gemessene Strecke bei den Signalstärke- oder Signallaufzeitverfahren immer den größten systematischen Fehler enthalten muss und nicht die potentiell zu kurz gemessene Strecke, die mit ihr verglichen wird. Ähnlich den obigen Überlegungen sei angenommen, dass die Auswerte- und Steuereinrichtung 80 erkannt hat, dass die Streckenmessungen zu den Zeitpunkten t(0) bis t(2) fehlerhaft sind.

Nachdem die Auswerte- und Steuereinrichtung 80 fehlerhafte Streckenmessungen erkannt und sogar zeitlich zugeordnet hat, können die fehlerhaften Streckenmessungen korrigiert werden.

Ein geeigneter Korrekturwert saK(t(i)) kann von der Auswerte- und Steuereinrichtung 80 automatisch zum Beispiel in Abhängigkeit von den zweiten Differenzwerten T1(i) bestimmt werden. Wie bereits erläutert, wurden von der Auswerte- und Steuereinrichtung 80 die Werte T1sig(3), T1sig(6) und T1sig(9) als diejenigen Werte identifiziert, welche betragsmäßig den Schwellenwert von 3 überschritten haben. Gemäß einer beispielhaften Vorschrift F(t(i); t(i-1)..) wählt die Auswerte- und Steuereinrichtung 80 nunmehr die Werte T1(3)=-1,21 und T1(9)=-0,92 als Korrekturwerte aus, um eine Rückwärts- bzw. Vorwärtskorrektur durchführen zu können. Die Korrekturwerte haben ein negatives Vorzeichen, da infolge der Hindernisse H1 und H2 zu große Strecken gemessen worden sind. Die Korrekturwerte saK(t(i)) sind in Zeile 17 der Figur 6 eingetragen. Wie aus Zeile 17 ersichtlich ist, sind die Korrekturwerte zu den Zeitpunkten, zu denen die Streckenmessergebisse nicht durch die Hindernisse H1 und H2 verfälscht worden sind, auf Null gesetzt.

In Zeile 18 sind die korrigierten Streckenmesswerte sA(t(i)) für die Zeitpunkte t(0) bis t(2) und t(6) bis t(8) eingetragen. Sie werden von der Auswerte- und Steuereinrichtung 80 durch Addition der Einträge in den Zeilen 13 und 17 gemäß der Gleichung

$$sA(t(i))=sa(t(i))+saK(t(i))$$

berechnet. Gemäß dem erläuterten Beispiel wurden die zu den Zeitpunkten t(0) bis t(2) ermittelten Streckenmesswerte sa(t(0) bis sa(t(2)) durch den Korrekturwert saK(t(3))=-1,21 vom Bezugszeitpunkt t(3) betrachtet rückwärts korrigiert, während die zu den Zeitpunkten t(6) bis t(8) ermittelten Streckenmesswerte sa(t(6) bis sa(t(8)) durch den Korrekturwert saK(t(3))=-0,92 vom Bezugszeitpunkt t(6) betrachtet vorwärts korrigiert wurden. Je nach Implementierung könnten alternativ oder zusätzlich die zu den Zeitpunkten t(6) bis t(8) ermittelten Streckenmesswerte sa(t(6) bis sa(t(8)) durch den Korrekturwert saK(t(3))=-1,04 vom Bezugszeitpunkt t(9) betrachtet rückwärts korrigiert werden. Die Auswerte- und Steuereinrichtung 80 könnte in diesem Fall die vorwärts korrigierten Streckenmesswerte sA(t(6) bis sA(t(8) und rückwärts korrigierten Streckenmesswerte sA(t(6) bis sA(t(8) vergleichen und zum Beispiel die korrigierten Streckenmesswerte auswählen, welche um den kleinsten Korrekturwert korrigiert worden sind, oder auch beide Korrekturwerte unterschiedlich gewichtet berücksichtigen.

Im vorliegenden Berechnungsbeispiel wurde der Einfachheit halber angenommen, dass jedes Hindernis nur eine geringe und eine nahezu gleichmäßige Dämpfung der RSS Signale für alle betroffenen Streckenmessungen verursacht. Die Korrekturwerte müssen aber nicht wie hier geschehen für Nachbarzeitpunkte identisch übernommen werden, sondern können jeweils neu berechnet werden. Auch muss ein Korrekturwert nicht linear von T1 abhängig sein, sondern kann zusätzlich auch die Genauigkeit von T1 berücksichtigen. Ein Korrekturwert kann sogar immer angebracht werden, wenn T1 von Null verschieden ist, sofern dieses statistisch als sinnvoll erscheint.

Ein Vergleich der Simulationsergebnisse aus der Zeile 13, welche die gemessenen Streckenmesswerte sa(t(i)) enthält, der Zeile 18, welche die korrigierten Streckenmesswerte sA(t(i)) enthält, und der Zeile 19, welche die simulierten, unbekannten und fehlerfreien Strecken sS1S2(t(i)) zwischen den beiden Smartphones 20 und 20' enthält, zeigt den Vorteil des erfindungsgemäßen Verfahrens und des erfindungsgemäßen Kommunikationssystem 10.

An dieser Stelle sei darauf hingewiesen, dass das erläuterte Szenario auch mit dem Smartphone 20' als das maßgebliche und steuernde Smartphone ausgeführt werden kann.

Die korrigierten Streckenmessungen können zum Beispiel dazu verwendet, die Position des Smartphones 20 erstmalig oder präziser zu bestimmen. Hierzu kann beispielsweise ein im Programmspeicher 50 des Smartphones 20 gespeicherter Algorithmus zur Positionsbestimmung unter Berücksichtigung der korrigierten Streckenmesswerte und der Position des Smartphones 20' von der Auswerte- und Steuereinrichtung 80 ausgeführt werden. Angenommen sei, dass der GPS-Empfänger 90 des Smartphones 20 deaktiviert sei und eine genauere Position des Smartphones 20 zum Zeitpunkt t(2) ermittelt werden soll. In diesem Fall fordert das Smartphone 20 das Smartphone 20' auf, seine zum Zeitpunkt t(2) ermittelte Position zum Smartphone 20 zu übertragen. Unter Ansprechen auf die zum Zeitpunkt t(2) ermittelte Position des Smartphones 20' und den korrigierten Streckenmesswert sA(t(2) kann die Auswerte- und Steuereinrichtung nunmehr die Position des Smartphones 20 zum Zeitpunkt t(2) erstmalig oder genauer bestimmen. Liegen zur Bestimmung der absoluten Position des Smartphones 20 keine weiteren Messungen vor, so kann die absolute Position nur als ein Abstand zur absoluten Position des Smartphones 20' bestimmt werden, also auf einen Kreis liegend. Liegt die absolute Position des Smartphones 20 nicht vor, so kann mit dem Verfahren die Abstandsbestimmung aus z. B. fortlaufenden RSS Messungen zwischen den beiden Smartphones überprüft und verbessert werden, also nur eine relative Positionierung zueinander verbessert werden.

Sind an dem Verfahren zur Positionsbestimmung weitere mobile Kommunikationseinrichtungen und/oder stationäre Einrichtungen beteiligt, zu denen das Smartphone 20 Streckenmessungen und Messwertkorrekturen durchführen kann und deren Positionen zum Zeitpunkt t(2) bekannt sind und dem Smartphone 20 zur Verfügung stehen, kann als Algorithmus zur Positionsbestimmung ein aus der Geodäsie bekanntes geometrisches Netzausgleichverfahren von der Auswerte- und Steuereinrichtung 80 ausgeführt werden, welches jede Position einer Kommunikationseinrichtung als absolute Position bestimmt. Ein solches Verfahren ist aus der WO2014/180845 bekannt. Sind in diesem Beispiel die Positionen zum Zeitpunkt t(2) nicht bekannt, kann als Algorithmus zur Positionsbestimmung ein aus der Geodäsie bekanntes geometrisches Netzausgleichverfahren von der Auswerte- und Steuereinrichtung 80 ausgeführt werden, wobei das Koordinatensystem beliebig definiert wird, um die Positionen in einem beliebigen Koordinatensystem zu erhalten und damit relative 3-dimensionale Punktlagen zueinander berechnen zu können. Auch ein solches Verfahren ist aus der WO2014/180845 bekannt.

**Patentansprüche**

1. Verfahren zum Erkennen eines fehlerhaften Streckenmesswertes bei einer Streckenmessung zwischen einer ersten mobilen Kommunikationseinrichtung (20), die eine Streckenmesseinrichtung (80) zur Streckenmessung und eine Messeinrichtung (30) zur Bestimmung einer relativen Positionskoordinatenänderung zwischen zwei Zeitpunkten aufweist, und wenigstens einer stationären Einrichtung, mit folgenden Schritten:

    a) Messen zu zwei aufeinanderfolgenden Zeitpunkten t(i-1) und t(i), mit i= 1, der Strecke zwischen der ersten mobilen Kommunikationseinrichtung (20) und der stationären Einrichtung, um jeweils einen Streckenmesswert zu den Zeitpunkten t(i) und t(i-1) zu erhalten;

    b) Ermitteln der Positionskoordinatenänderung der ersten mobilen Kommunikationseinrichtung zwischen dem Zeitpunkt t(i) und dem zeitlich früheren Zeitpunkt t(i-1);

    c) Ermitteln für den Zeitpunkt t(i) der Abstandsänderung zwischen der ersten mobilen Kommunikationseinrichtung und der stationären Einrichtung in Abhängigkeit von der zwischen dem Zeitpunkt t(i) und dem früheren Zeitpunkt t(i-1) gemessenen Positionskoordinatenänderung der mobilen Kommunikationseinrichtung;

d) Berechnen für den Zeitpunkt t(i) eines ersten Differenzwerts aus dem zum Zeitpunkt t(i) gemessenen Streckenmesswert und dem zu dem früheren Zeitpunkt t(i-1) gemessenen Streckenmesswert;

e) Berechnen für den Zeitpunkt t(i) eines zweiten Differenzwertes zwischen dem in Schritt d) für den Zeitpunkt t(i) und dem Zeitpunkt t(i-1) ermittelten ersten Differenzwert und der in Schritt c) zwischen dem Zeitpunkt t(i) und dem zeitlich früheren Zeitpunkt t(i-1) ermittelten Abstandsänderung und Prüfen, ob der zweite Differenzwert betragsmäßig größer als ein vorbestimmter Schwellenwert ist, um einen fehlerhaften Streckenmesswert zu erkennen.

2. Verfahren zum Erkennen eines fehlerhaften Streckenmesswertes bei einer Streckenmessung zwischen einer ersten mobilen Kommunikationseinrichtung (20), die eine Streckenmesseinrichtung (80) zur Streckenmessung und eine Messeinrichtung (30) zur Bestimmung einer relativen Positionskoordinatenänderung zwischen zwei Zeitpunkten aufweist, und wenigstens einer zweiten mobilen Kommunikationseinrichtung (20'), die eine Messeinrichtung (30') zur Bestimmung einer relativen Positionskoordinatenänderung zwischen zwei Zeitpunkten aufweist, mit folgenden Schritten:

a) Messen zu zwei aufeinanderfolgenden Zeitpunkten t(i-1) und t(i), mit i= 1, der Strecke zwischen der ersten mobilen Kommunikationseinrichtung und der zweiten mobilen Kommunikationseinrichtung, um jeweils einen Streckenmesswert zu den Zeitpunkten t(i) und t(i-1) zu erhalten;

b1) Ermitteln der relativen Positionskoordinatenänderung der ersten mobilen Kommunikationseinrichtung zwischen dem Zeitpunkt t(i) und dem zeitlich früheren Zeitpunkt t(i-1);

b2) Ermitteln der relativen Positionskoordinatenänderung der zweiten mobilen Kommunikationseinrichtung zwischen dem Zeitpunkt t(i) und dem zeitlich früheren Zeitpunkt t(i-1);

c) Ermitteln für den Zeitpunkt t(i) der Abstandsänderung zwischen der ersten mobilen Kommunikationseinrichtung und der zweiten mobilen Kommunikationseinrichtung in Abhängigkeit von der zwischen dem Zeitpunkt t(i) und dem früheren Zeitpunkt t(i-1) gemessenen Positionskoordinatenänderung der ersten mobilen Kommunikationseinrichtung und in Abhängigkeit von der zwischen dem Zeitpunkt t(i) und dem früheren Zeitpunkt t(i-1) gemessenen Positionskoordinatenänderung der zweiten mobilen Kommunikationseinrichtung;

d) Berechnen für den Zeitpunkt t(i) eines ersten Differenzwerts aus dem zum Zeitpunkt t(i) gemessenen Streckenmesswert und dem zu dem früheren Zeitpunkt t(i-1) gemessenen Streckenmesswert;

e) Berechnen für den Zeitpunkt t(i) eines zweiten Differenzwertes zwischen dem in Schritt d) für den Zeitpunkt t(i) und dem Zeitpunkt t(i-1) ermittelten ersten Differenzwert und der in Schritt c) zwischen dem Zeitpunkt t(i) und dem zeitlich früheren Zeitpunkt t(i-1) ermittelten Abstandsänderung und Prüfen, ob der zum Zeitpunkt t(i) berechnete zweite Differenzwert betragsmäßig größer als ein vorbestimmter Schwellenwert ist, um einen fehlerhaften Streckenmesswert zu erkennen.

3. Verfahren nach Anspruch 1 oder 2,
**dadurch gekennzeichnet, dass**
die Schritte a) bis e) für mehrere aufeinanderfolgende Zeitpunkte t(i), mit i=2, 3, ...n, wiederholt werden.

4. Verfahren nach einem der vorstehenden Ansprüche, **dadurch gekennzeichnet, dass**
die Schritte a) bis e) unter Steuerung der ersten mobilen Kommunikationseinrichtung (20) ausgeführt werden.

5. Verfahren nach Anspruch 2, 3 und 4,
**dadurch gekennzeichnet, dass**
die zweite mobile Kommunikationseinrichtung (20') von der ersten mobilen Kommunikationseinrichtung (20) aufgefordert wird, ihre Positionskoordinatenänderungen zu ermitteln und die Positionskoordinatenänderungen mit den dazugehörenden Zeitpunkten zur ersten mobilen Kommunikationseinrichtung (20) zu übertragen.

6. Verfahren nach einem der Ansprüche 2 bis 5,
**dadurch gekennzeichnet, dass**
die erste mobile Kommunikationseinrichtung (20) und die zweite mobile Kommunikationseinrichtung (20') synchronisiert werden.

7. Verfahren nach einem der vorstehenden Ansprüche, **dadurch gekennzeichnet, dass**
der vorbestimmte Schwellenwert Null ist.

8. Verfahren nach einem der vorstehenden Ansprüche, **dadurch gekennzeichnet, dass**

in Schritt a) eine RSS (Received Signal Strength)-basierte Streckenmessung oder eine auf einer Laufzeitmessung basierte Streckenmessung zwischen der ersten mobilen Kommunikationseinrichtung (20) und der stationären Einrichtung oder zwischen der ersten mobilen Kommunikationseinrichtung und der zweiten mobilen Kommunikationseinrichtung (20') durchgeführt wird.

9. Verfahren nach einem der vorstehenden Ansprüche, **dadurch gekennzeichnet, dass** wenigstens ein in Schritt e) als fehlerhaft erkannter Streckenmesswert korrigiert wird.

10. Verfahren nach Anspruch 9,
**dadurch gekennzeichnet, dass**
der als fehlerhaft erkannte Streckenmesswert durch einen Korrekturwert ersetzt wird, welcher in Abhängigkeit von dem in Schritt e) berechneten zweiten Differenzwert gebildet wird.

11. Verfahren nach Anspruch 9 oder 10,
**dadurch gekennzeichnet, dass**
die ermittelten Abstandsänderungen, die in Schritt a) erhaltenen Streckenmesswerte, und die berechneten ersten Differenzwerte sowie die jeweils dazugehörenden Zeitpunkte $t(i)$ und $t(i-1)$ in der ersten mobilen Kommunikationseinrichtung (20) gespeichert werden, und dass,
wenn der in Schritt e) zum Zeitpunkt $t(i)$ berechnete zweite Differenzwert betragsmäßig größer als der Schwellenwert ist und ein negatives Vorzeichen besitzt, wenigstens der zu dem früheren Zeitpunkt $t(i-k)$, mit $k \geq 1$, ermittelte Streckenmesswert als fehlerhaft erkannt wird und korrigiert werden kann, und dass,
wenn der in Schritt e) zum Zeitpunkt $t(i)$ berechnete zweite Differenzwert betragsmäßig größer als der Schwellenwert ist und ein positives Vorzeichen besitzt, der zum Zeitpunkt $t(i)$ ermittelte Streckenmesswert und wenigstens der zu einem späteren Zeitpunkt $t(i+k)$, mit $k \geq 1$ ermittelte Streckenmesswert als fehlerhaft erkannt wird und korrigiert werden kann.

12. Verfahren nach einem der vorstehenden Ansprüche, **dadurch gekennzeichnet, dass** in der ersten mobilen Kommunikationseinrichtung (20) ein Algorithmus zum Bestimmen der Position der ersten mobilen Kommunikationseinrichtung unter Berücksichtigung des korrigierten Streckenmesswerts und der Position der stationären Einrichtung oder der zweiten mobilen Kommunikationseinrichtung (20) durchgeführt wird.

13. Verfahren nach einem der vorstehenden Ansprüche, **dadurch gekennzeichnet, dass** in Schritt c) die betragsmäßig maximale Abstandsänderung ermittelt wird.

14. Drahtloses Kommunikationssystem (10) zum Erkennen eines fehlerhaften Streckenmesswertes bei einer Streckenmessung zwischen einer ersten mobilen Kommunikationseinrichtung (20) und einer stationären Einrichtung umfassend
wenigstens eine stationäre Einrichtung,
wenigstens eine erste mobile Kommunikationseinrichtung (20), die eine Streckenmesseinrichtung (80) zum Messen der Strecke zwischen der ersten mobilen Kommunikationseinrichtung (20) und der stationären Einrichtung, eine Messeinrichtung (30) zum Messen einer relativen Positionskoordinatenänderung der ersten mobilen Kommunikationseinrichtung (20) zwischen zwei Zeitpunkten, und eine Auswerte- und Steuereinrichtung (60) aufweist, die dazu ausgebildet ist,

a) die Streckenmesseinrichtung zu veranlassen, zu zwei aufeinanderfolgenden Zeitpunkten $t(i-1)$ und $t(i)$, mit $i=1$, die Strecke zwischen der ersten mobilen Kommunikationseinrichtung (20) und der stationären Einrichtung zu messen, um jeweils einen Streckenmesswert zu den Zeitpunkten $t(i)$ und $t(i-1)$ zu erhalten,
b) die Messeinrichtung (30) zu veranlassen, eine relative Positionskoordinatenänderung der ersten mobilen Kommunikationseinrichtung (20) zwischen dem Zeitpunkt $t(i)$ und dem zeitlich früheren Zeitpunkt $t(i-1)$ zu ermitteln,
c) für den Zeitpunkte $t(i)$ die Abstandsänderung zwischen der ersten mobilen Kommunikationseinrichtung (20) und der stationären Einrichtung in Abhängigkeit von der zwischen dem Zeitpunkt $t(i)$ und dem zeitlich früheren Zeitpunkt $t(i-1)$ gemessenen relativen Positionskoordinatenänderung zu ermitteln,
d) für den Zeitpunkt $t(i)$ einen ersten Differenzwert aus dem zum Zeitpunkt $t(i)$ gemessenen Streckenmesswert und dem zum Zeitpunkt $t(i-1)$ gemessenen Streckenmesswert zu berechnen, und
e) für den Zeitpunkt $t(i)$ einen zweiten Differenzwert zwischen dem in Merkmal d) für den Zeitpunkt $t(i)$ und dem früheren Zeitpunkt $t(i-1)$ ermittelten ersten Differenzwert und der in Merkmal c) zwischen dem Zeitpunkt $t(i)$ und dem zeitlich früheren Zeitpunkt $t(i-1)$ ermittelten Abstandsänderung zu berechnen und zu prüfen, ob der zum Zeitpunkt t(i) berechnete zweite Differenzwert betragsmäßig größer als ein vorbestimmter Schwellenwert oder gleich einem vorbestimmten Schwellenwert ist, um einen fehlerhaften Streckenmesswert zu erkennen.

15. Drahtloses Kommunikationssystem (10) zum Erkennen eines fehlerhaften Streckenmesswertes bei einer Streckenmessung zwischen wenigstens zwei mobilen Kommunikationseinrichtungen, umfassend,
eine erste mobile Kommunikationseinrichtung (20), die eine Streckenmesseinrichtung (80) zum Messen der Strecke zwischen der ersten mobilen Kommunikationseinrichtung und wenigstens einer zweiten mobilen Kommunikationseinrichtung (20'), eine Messeinrichtung (30) zum Messen einer relativen Positionskoordinatenänderung der ersten mobilen Kommunikationseinrichtung zwischen zwei Zeitpunkten, und eine Auswerte- und Steuereinrichtung (60) aufweist,
wobei die wenigstens eine zweite mobile Kommunikationseinrichtung (20') eine Messeinrichtung (30') zum Messen einer relativen Positionskoordinatenänderung der zweiten mobilen Kommunikationseinrichtung (20') zwischen zwei Zeitpunkten und eine Auswerte- und Steuereinrichtung (60') aufweist,
wobei die Auswerte- und Steuereinrichtung (60) der ersten mobilen Kommunikationseinrichtung (20) dazu ausgebildet ist,

a) die Streckenmesseinrichtung (80) zu veranlassen, zu zwei aufeinanderfolgenden Zeitpunkten t(i-1) und t(i), mit i=1, die Strecke zwischen der ersten mobilen Kommunikationseinrichtung (20) und der zweiten mobilen Kommunikationseinrichtung (20') zu messen, um jeweils einen Streckenmesswert zu den Zeitpunkten t(i) und t(i-1) zu erhalten,
b1) die Messeinrichtung (30) der ersten mobilen Kommunikationseinrichtung (20) zu veranlassen, eine relative Positionskoordinatenänderung der ersten mobilen Kommunikationseinrichtung (20) zwischen dem Zeitpunkt t(i) und dem zeitlich früheren Zeitpunkt t(i-1) zu ermitteln,
b2) die Messeinrichtung (30') der zweiten mobilen Kommunikationseinrichtung (20') zu veranlassen, eine relative Positionskoordinatenänderung der zweiten mobilen Kommunikationseinrichtung (20') zwischen dem Zeitpunkt t(i) und dem zeitlich früheren Zeitpunkt t(i-1) zu ermitteln, und die zweite mobile Kommunikationseinrichtung (20') aufzufordern, relativen Positionskoordinatenänderungen und die dazugehörenden Zeitpunkte zur ersten mobilen Kommunikationseinrichtung (20) zu übertragen,
c) für den Zeitpunkte t(i) die Abstandsänderung zwischen der ersten mobilen Kommunikationseinrichtung (20) und der zweiten mobilen Kommunikationseinrichtung (20') in Abhängigkeit von der zwischen dem Zeitpunkt t(i) und dem zeitlich früheren Zeitpunkt t(i-1) gemessenen Positionskoordinatenänderung der ersten mobilen Kommunikationseinrichtung (20) und in Abhängigkeit von der zwischen dem Zeitpunkt t(i) und dem zeitlich früheren Zeitpunkt t(i-1) gemessenen Positionskoordinatenänderung der zweiten mobilen Kommunikationseinrichtung (20') zu ermitteln,
d) für den Zeitpunkt t(i) einen ersten Differenzwert aus dem zum Zeitpunkt t(i) gemessenen Streckenmesswert und dem zum Zeitpunkt t(i-1) gemessenen Streckenmesswert zu berechnen, und
e) für den Zeitpunkt t(i) einen zweiten Differenzwert zwischen dem in Merkmal d) für den Zeitpunkt t(i) und dem früheren Zeitpunkt t(i-1) ermittelten ersten Differenzwert und der in Merkmal c) zwischen dem Zeitpunkt t(i) und dem zeitlich früheren Zeitpunkt t(i-1) ermittelten Abstandsänderung zu berechnen und zu prüfen, ob der zum Zeitpunkt t(i) berechnete zweite Differenzwert betragsmäßig größer als ein vorbestimmter Schwellenwert oder gleich einem vorbestimmten Schwellenwert ist, um einen fehlerhaften Streckenmesswert zu erkennen.

16. Drahtloses Kommunikationssystem nach Anspruch 14 oder 15,
**dadurch gekennzeichnet, dass**
die Auswerte- und Steuereinrichtung (60) der ersten mobilen Kommunikationseinrichtung (20) dazu ausgebildet ist, die Merkmale a) bis e) für mehrere aufeinanderfolgende Zeitpunkte t(i), mit i=2, 3, ...n, zu wiederholen.

17. Drahtloses Kommunikationssystem nach einem der Ansprüche 14 bis 16,
**dadurch gekennzeichnet, dass**
die Auswerte- und Steuereinrichtung (60) der ersten mobilen Kommunikationseinrichtung (20) dazu ausgebildet ist, einen als fehlerhaft erkannten Streckenmesswert zu korrigieren.

18. Drahtloses Kommunikationssystem nach einem der Ansprüche 14 bis 17,
**dadurch gekennzeichnet, dass**
die Auswerte- und Steuereinrichtung (60) der ersten mobilen Kommunikationseinrichtung (20) dazu ausgebildet ist, einen Algorithmus zum Bestimmen der Position der ersten mobilen Kommunikationseinrichtung (20) zum jeweiligen Zeitpunkt t(i) unter Berücksichtigung des korrigierten Streckenmesswertes und der Position der stationären Einrichtung oder der zweiten mobilen Kommunikationseinrichtung (20') durchzuführen.

**19.** Drahtloses Kommunikationssystem nach eine der Ansprüche 14 bis 18,
**dadurch gekennzeichnet, dass**
die Messeinrichtung (30; 30') der ersten und zweiten mobilen Kommunikationseinrichtungen jeweils eine Beschleunigungsmesseinrichtung enthält, und dass die Streckenmesseinrichtung (60) dazu ausgebildet ist, eine RSS (Received Signal Strength)-basierte Streckenmessung oder eine auf einer Laufzeitmessung basierte Streckenmessung zwischen der ersten mobilen Kommunikationseinrichtung (20) und der stationären Einrichtung oder zwischen der ersten mobilen Kommunikationseinrichtung (20) und der zweiten mobilen Kommunikationseinrichtung (20') durchzuführen.

**20.** Computerprogramm enthaltend
eine Vielzahl von Anweisungen, die zumindest in einer mobilen Kommunikationseinrichtung (20) speicherbar sind, wobei die Anweisungen, wenn sie von einer Auswerte- und Steuereinrichtung (60) der mobilen Kommunikationseinrichtung (20) ausgelesen und verarbeitet werden, das Verfahren nach einem der Ansprüche 1 bis 13 ausführen.

**Claims**

**1.** A method for detecting a faulty path measurement value at a path measurement between a first mobile communication device (20) which has a path measuring device (80) for path measurement und a measuring device (30) for determining a relative change in position coordinates between two time points, and at least one stationary device, comprising the following steps:

a) measuring the path between the first mobile communication device (20) and the stationary device at two successive time points $t(i-1)$ and $t(i)$, with $i = 1$, to obtain a path measurement value for each time point $t(i)$ and $t(i-1)$;
b) determining the change in position coordinates of the first mobile communication device between time point $t(i)$ and the earlier time point $t(i-1)$;
c) determining, for time point $t(i)$, the change in distance between the first mobile communication device and the stationary device as a function of the change in position coordinates of the mobile communication device measured between time point $t(i)$ and the earlier time point $t(i-1)$;
d) calculating, for time point $t(i)$, a first difference value from the path measurement value measured at time point $t(i)$ and the path measurement value measured at the earlier time point $t(i-1)$;
e) calculating, for time point $t(i)$, a second difference value between the first difference value determined in step d) for time point $t(i)$ and time point $t(i-1)$ and the change in distance determined in step c) between time point $t(i)$ and the earlier time point $t(i-1)$, and checking whether the second difference value has a greater absolute value than a predetermined threshold value, in order to detect a faulty path measurement value.

**2.** A method for detecting a faulty path measurement value in a path measurement between a first mobile communication device (20) which has a path measuring device (80) for path measurement und a measuring device (30) for determining a relative change in position coordinates between two time points, and at least one second mobile communication device (20') which has a measuring device (30') for determining a relative change in position coordinates between two time points, comprising the following steps:

a) measuring the path between the first mobile communication device and the second mobile communication device at two consecutive time points $t(i-1)$ and $t(i)$, with $i = 1$, to obtain a path measurement value for each time point $t(i)$ and $t(i-1)$;
b1) determining the relative change in position coordinates of the first mobile communication device between time point $t(i)$ and the earlier time point $t(i-1)$;
b2) determining the relative change in position coordinates of the second mobile communication device between time point $t(i)$ and the earlier time point $t(i-1)$;
c) determining, for time point $t(i)$, the change in distance between the first mobile communication device and the second mobile communication device as a function of the change in position coordinates of the first mobile communication device measured between time point $t(i)$ and the earlier time point $t(i-1)$ and as a function of the change in position coordinates of the second mobile communication device measured between time point $t(i)$ and the earlier time point $t(i-1)$;
d) calculating, for time point $t(i)$, a first difference value from the path measurement value measured at time point $t(i)$ and the path measurement value measured at the earlier time point $t(i-1)$;
e) calculating, for time point $t(i)$, a second difference value between the first difference value determined in step d) for time point $t(i)$ and time point $t(i-1)$ and the change in distance determined in step c) between time point t(i) and the earlier time point t(i-1), and checking whether the second difference value calculated at time point t(i) has a greater absolute value than a predetermined threshold value, in order to detect a faulty path measurement value.

3. The method according to claim 1 or 2,
**characterized in that**
steps a) to e) are repeated for a plurality of consecutive time points t(i), with i = 2,3,...,n.

4. The method according to any one of the preceding claims, **characterized in that**
steps a) to e) are executed under control of the first mobile communication device (20).

5. The method according to claim 2, 3, and 4,
**characterized in that**
the second mobile communication device (20') is prompted by the first mobile communication device (20) to determine its changes in position coordinates and to transmit the changes in position coordinates together with the corresponding time points to the first mobile communication device (20).

6. The method according to any one of claims 2 to 5,
**characterized in that**
the first mobile communication device (20) and the second mobile communication device (20') are synchronized.

7. The method according to any one of the preceding claims, **characterized in that**
the predetermined threshold value is zero.

8. The method according to any one of the preceding claims, **characterized in that**
in step a), a path measurement based on RSS (Received Signal Strength) or a path measurement based on a run time measurement is executed between the first mobile communication device (20) and the stationary device or between the first mobile communication device and the second mobile communication device (20').

9. The method according to any one of the preceding claims, **characterized in that**
at least one path measurement value detected as faulty in step e) is corrected.

10. The method according to claim 9,
**characterized in that**
the path measurement value detected as faulty is replaced by a correction value which is determined as a function of the second difference value calculated in step e).

11. The method according to claim 9 or 10,
**characterized in that**
the determined changes in distance, the path measurement values obtained in step a), and the calculated first difference values and the respective corresponding time points t(i) and t(i-1) are stored in the first mobile communication device (20); and that
if the second difference value calculated in step e) at time point t(i) has a greater absolute value than the threshold value and has a negative sign, at least the path measurement value determined at the earlier time point t(i-k), with $k \geq 1$, is detected as faulty and can be corrected; and that
if the second difference value calculated in step e) at time point t(i) has a greater absolute value than the threshold value and has a positive sign, the path measurement value determined at time point t(i) and at least the path measurement value determined at a later time point t(i+k), with $k \geq 1$, are detected as faulty and can be corrected.

12. The method according to any one of the preceding claims, **characterized in that**
the first mobile communication device (20) executes an algorithm for determining the position of the first mobile communication device taking into account the corrected path measurement value and the position of the stationary device or of the second mobile communication device (20').

13. The method according to any one of the preceding claims, **characterized in that** step c) includes determining the change in distance which has the maximum absolute value.

14. A wireless communication system (10) for detecting a faulty path measurement value at a distance measurement between a first mobile communication device (20) and a stationary device, comprising:

at least one stationary device;
at least one first mobile communication device (20), which has a path measuring device (80) for measuring the path between the first mobile communication device (20) and the stationary device, a measuring device (30) for measuring a relative change in position coordinates of the first mobile communication device (20) between two time points, and an evaluation and control device (60), which is adapted:

a) to prompt the path measuring device to measure the path between the first mobile communication device (20) and the stationary device at two consecutive time points t(i-1) and t(i), with i = 1, to obtain a path measurement value for each time point t(i) and t(i-1);
b) to prompt the measuring device (30) to determine a relative change in position coordinates of the first mobile communication device (20) between time point t(i) and the earlier time point t(i-1);
c) to determine the change in distance at time point t(i) between the first mobile communication device (20) and the stationary device as a function of the relative change in position coordinates measured between time point t(i) and the earlier time point t(i-1);
d) to calculate, for time point t(i), a first difference value from the path measurement value measured at time point t(i) and the path measurement value measured at time point t(i-1); and
e) to calculate, for time point t(i), a second difference value between the first difference value determined according to feature d) for time point t(i) and the earlier time point t(i-1) and the change in distance determined according to feature c) between time point t(i) and the earlier time point(t-1), and to check whether the second difference value calculated at time point t(i) has a greater absolute value than a predetermined threshold value or is equal to a predetermined threshold value, in order to detect a faulty path measurement value.

15. A wireless communication system (10) for detecting a faulty path measurement value at a distance measurement between at least two mobile communication devices, comprising:

a first mobile communication device (20) having a path measuring device (80) for measuring the path between the first mobile communication device and at least one second mobile communication device (20'), a measuring device (30) for measuring a relative change in position coordinates of the first mobile communication device between two time points, and an evaluation and control device (60);
wherein the at least one second mobile communication device (20') has a measuring device for measuring a relative change in position coordinates of the second mobile communication device (20') between two time points and an evaluation and control device (60');
wherein the evaluation and control device (60) of the first mobile communication device (20) is adapted:

a) to prompt the path measuring device (80) to measure the path between the first mobile communication device (20) and the second mobile communication device (20') at two consecutive time points t(i-1) and t(i), with i = 1, to obtain a path measurement value for each time point t (i) and t(i-1);
(b1) to prompt the measuring device (30) of the first mobile communication device (20) to determine a relative change in position coordinates of the first mobile communication device (20) between time point t(i) and the earlier time point t(i-1);
(b2) to prompt the measuring device (30') of the second mobile communication device (20') to determine a relative change in position coordinates of the second mobile communication device (20') between time point t(i) and the earlier time point t(i-1), and to prompt the second mobile communication device (20') to transmit the relative change in position coordinates and the corresponding time points to the first mobile communication device (20);
c) for time point t(i), to determine the change in distance between the first mobile communication device (20) and the second mobile communication device (20') as a function of the change in position coordinates of the first mobile communication device (20) measured between time point t(i) and the earlier time point t(i-1) and as a function of the change in position coordinates of the second mobile communication device (20') measured between time point t(i) and the earlier time point t(i-1);
d) to calculate, for time point t(i), a first difference value from the path measurement value measured at time point t(i) and the path measurement value measured at time point t(i-1); and
e) to calculate, for time point t(i), a second difference value between the first difference value determined according to feature d) for time point t(i) and the earlier time point t(i-1) and the change in distance determined according to feature c) between time point t(i) and the earlier time point(t-1), and to check whether the second difference value calculated at time point t(i) has a greater absolute value than a predetermined threshold value or is equal to a predetermined threshold value, in order to detect a faulty path measurement value.

16. The wireless communication system according to claim 14 or 15, **characterized in that**
the evaluation and control device (60) of the first mobile communication device (20) is adapted to repeat features a) to e) for a plurality of consecutive time points t(i), with i = 2,3,...,n.

17. The wireless communication system according to any one of claims 14 to 16, **characterized in that**
the evaluation and control device (60) of the first mobile communication device (20) is adapted to correct a distance measurement value detected as faulty.

18. The wireless communication system according to any one of claims 14 to 17, **characterized in that**
the evaluation and control device (60) of the first mobile communication device (20) is adapted to execute an algorithm for determining the position of the first mobile communication device (20) at a respective time point t(i) while taking into account the corrected path measurement value and the position of the stationary device or of the second mobile communication device (20').

19. The wireless communication system according to any one of claims 14 to 18, **characterized in that**
the distance measuring devices (30; 30') of the first and second mobile communication devices each comprise an acceleration measuring device, and that the path measuring device (80) is adapted to execute a path measurement based on RSS (Received Signal Strength) or a path measurement based on a run time measurement between the first mobile communication device (20) and the stationary device or between the first mobile communication device (20) and the second mobile communication device (20').

20. A computer program comprising a plurality of
instructions which can be stored in at least one mobile communication device (20), wherein the instructions, when read and processed by an evaluation and control device (60) of the mobile communication device (20), execute the method according to any one of claims 1 to 13.

**Revendications**

1. Procédé de reconnaissance d'une valeur de mesure de distance erronée lors d'une mesure de distance entre un premier dispositif de communication mobile (20), qui comprend un dispositif de mesure de distance (80) pour la mesure de la distance et un dispositif de mesure (30) pour la détermination d'une variation de coordonnées de position relative entre deux instants, et au moins un dispositif fixe, comprenant les étapes suivantes :

a) mesurer à deux instants t(i - 1) et t(i) successifs, avec i = 1, la distance entre le premier dispositif de communication mobile (20) et le dispositif fixe, afin d'obtenir dans chaque cas une valeur de mesure de distance aux instants t(i) et t(i - 1) ;
b) déterminer la modification de coordonnées de position du premier dispositif de communication mobile entre l'instant t(i) et l'instant antérieur t(i - 1) ;
c) déterminer pour l'instant t(i) la variation d'écart entre le premier dispositif de communication mobile et le dispositif fixe en fonction de la variation de coordonnées de position du dispositif de communication mobile mesurée entre l'instant t(i) et l'instant antérieur t(i - 1) ;
d) calculer pour l'instant t(i) une première valeur de différence à partir de la valeur de mesure de distance mesurée à l'instant t(i) et la valeur de mesure de distance mesurée à l'instant t(i - 1) précédent ;
e) calculer pour l'instant t(i) une deuxième valeur de différence entre la première valeur de différence déterminée à l'étape d) pour l'instant t(i) et l'instant t(i - 1) et la variation d'écart déterminée à l'étape c) entre l'instant t(i) et l'instant antérieur t(i - 1) et vérifier si la deuxième valeur de différence présente une grandeur supérieure à celle d'une valeur seuil prédéfinie, afin de reconnaître une valeur de mesure de distance erronée.

2. Procédé de reconnaissance d'une valeur de mesure de distance erronée pour une mesure de distance entre un premier dispositif de communication mobile (20), qui comprend un dispositif de mesure de distance (80) pour la mesure de la distance et un dispositif de mesure (30) pour la détermination d'une variation de coordonnées de position relative entre deux instants, et au moins un deuxième dispositif de communication mobile (20'), qui comprend un dispositif de mesure (30') pour la détermination d'une variation de coordonnées de position relative entre deux instants, comprenant les étapes suivantes :

a) mesurer à deux instants t(i - 1) et t(i) successifs, avec i = 1, la distance entre le premier dispositif de communication mobile et le deuxième dispositif de communication mobile, afin d'obtenir dans chaque cas une valeur de mesure de distance aux instants t(i) et t(i - 1) ;

b1) déterminer la variation de coordonnées de position relative du premier dispositif de communication mobile entre l'instant t(i) et l'instant antérieur t(i - 1) ;

b2) déterminer la variation de coordonnées de position relative du deuxième dispositif de communication mobile entre l'instant t(i) et l'instant antérieur t(i - 1) ;

c) déterminer pour l'instant t(i) la variation d'écart entre le premier dispositif de communication mobile et le deuxième dispositif de communication mobile en fonction de la variation de coordonnées de position du premier dispositif de communication mobile mesurée entre l'instant t(i) et l'instant t(i - 1) précédent et en fonction de la variation de coordonnées de position du deuxième dispositif de communication mobile mesurée entre l'instant t(i) et l'instant t(i - 1) précédent ;

d) calculer pour l'instant t(i) une première valeur de différence à partir de la valeur de mesure de distance mesurée à l'instant t(i) et de la valeur de mesure de distance mesurée à l'instant antérieur t(i - 1) ;

e) calculer pour l'instant t(i) une deuxième valeur de différence entre la première valeur de différence déterminée à l'étape d) pour l'instant t(i) et l'instant t(i - 1) et la variation d'écart déterminée à l'étape c) entre l'instant t(i) et l'instant t(i - 1) précédent et vérifier si la deuxième valeur de différence calculée à l'instant t(i) présente une grandeur supérieure à celle d'une valeur seuil prédéfinie, afin de reconnaître une valeur de mesure de distance erronée.

3. Procédé selon la revendication 1 ou 2, **caractérisé en ce que** les étapes a) à e) sont répétées pour plusieurs instants t(i) successifs, avec i = 2, 3, ...n.

4. Procédé selon l'une quelconque des revendications précédentes, **caractérisé en ce que** les étapes a) à e) sont exécutées en commandant le premier dispositif de communication mobile (20).

5. Procédé selon les revendications 2, 3 et 4, **caractérisé en ce que** le deuxième dispositif de communication mobile (20') est invité par le premier dispositif de communication mobile (20) à déterminer ses variations de coordonnées de position et à transmettre les variations de coordonnées de position comprenant les instants correspondants au premier dispositif de communication mobile (20).

6. Procédé selon l'une quelconque des revendications 2 à 5, **caractérisé en ce que** le premier dispositif de communication mobile (20) et le deuxième dispositif de communication mobile (20') sont synchronisés.

7. Procédé selon l'une quelconque des revendications précédentes, **caractérisé en ce que** la valeur seuil prédéfinie est zéro.

8. Procédé selon l'une quelconque des revendications précédentes, **caractérisé en ce que**, à l'étape a), une mesure de distance basée sur l'ISR (intensité du signal reçu) ou une mesure de distance basée sur un temps de propagation entre le premier dispositif de communication mobile (20) et le dispositif fixe ou entre le premier dispositif de communication mobile et le deuxième dispositif de communication mobile (20') est réalisée.

9. Procédé selon l'une quelconque des revendications précédentes, **caractérisé en ce qu'**au moins une valeur de mesure de distance reconnue comme erronée à l'étape e) est corrigée.

10. Procédé selon la revendication 9, **caractérisé en ce que** la valeur de mesure de distance reconnue comme erronée est remplacée par une valeur de correction, laquelle est formée en fonction de la deuxième valeur de différence calculée à l'étape e).

11. Procédé selon la revendication 9 ou 10, **caractérisé en ce que** :

les variations d'écart déterminées, les valeurs de mesure de distance obtenues à l'étape a), et les premières valeurs de différence calculées ainsi que les instants t(i) et t(i - 1) respectivement associés sont mis en mémoire dans le premier dispositif de communication mobile (20),
et **en ce que**
lorsque la deuxième valeur de différence calculée à l'étape e) à l'instant t(i) présente une grandeur supérieure à celle de la valeur seuil et possède un signe négatif, au moins la valeur de mesure de distance déterminée à l'instant antérieur t (i - k), avec k ≥ 1, est reconnue comme erronée et peut être corrigée,

et **en ce que**

lorsque la deuxième valeur de différence calculée à l'étape e) à l'instant t(i) présente une grandeur supérieure à celle de la valeur seuil et possède un signe positif, la valeur de mesure de distance déterminée à l'instant t(i) et au moins la valeur de mesure de distance déterminée à un instant ultérieur t(i + k), avec k ≥ 1, est reconnue comme erronée et peut être corrigée.

**12.** Procédé selon l'une quelconque des revendications précédentes, **caractérisé en ce que**, dans le premier dispositif de communication mobile (20), un algorithme servant à déterminer la position du premier dispositif de communication mobile, en prenant en considération la valeur de mesure de distance corrigée et la position du dispositif fixe ou du deuxième dispositif de communication mobile (20), est exécuté.

**13.** Procédé selon l'une quelconque des revendications précédentes, **caractérisé en ce que**, à l'étape c), la grandeur de la variation maximale d'écart est déterminée.

**14.** Système de communication sans fil (10) pour la reconnaissance d'une valeur de mesure de distance erronée lors d'une mesure de distance entre un premier dispositif de communication mobile (20) et un dispositif fixe comprenant :

au moins un dispositif fixe,
au moins un premier dispositif de communication mobile (20), qui comprend un dispositif de mesure de distance (80) servant à mesurer la distance entre le premier dispositif de communication mobile (20) et le dispositif fixe, un dispositif de mesure (30) servant à mesurer une variation de coordonnées de position relative du premier dispositif de communication mobile (20) entre deux instants, et un dispositif d'évaluation et de commande (60), qui est conçu pour :

a) amener le dispositif de mesure de distance à mesurer à deux instants t(i - 1) et t(i) successifs, avec i = 1, la distance entre le premier dispositif de communication mobile (20) et le dispositif fixe, afin d'obtenir dans chaque cas une valeur de mesure de distance aux instants t(i) et t (i - 1) ;
b) amener le dispositif de mesure (30) à déterminer une variation de coordonnées de position relative du premier dispositif de communication mobile (20) entre l'instant t(i) et l'instant t(i - 1) précédent ;
c) déterminer pour l'instant t(i) la variation d'écart entre le premier dispositif de communication mobile (20) et le dispositif fixe en fonction de la variation de coordonnées de position relative mesurée entre l'instant t(i) et l'instant t(i - 1) précédent ;
d) calculer pour l'instant t(i) une première valeur de différence à partir de la valeur de mesure de distance mesurée à l'instant t(i) et la valeur de mesure de distance mesurée à l'instant t(i - 1), et
e) calculer pour l'instant t(i) une deuxième valeur de différence entre la première valeur de différence déterminée à la caractéristique d) pour l'instant t(i) et l'instant antérieur t(i - 1) et la variation d'écart déterminée à la caractéristique c) entre l'instant t(i) et l'instant t(i - 1) précédent et vérifier si la grandeur de la deuxième valeur de différence calculée à l'instant t(i) est supérieure à celle d'une valeur seuil prédéfinie ou égale à une valeur seuil prédéfinie, afin de reconnaître une valeur de mesure de distance erronée.

**15.** Système de communication sans fil (10) pour la reconnaissance d'une valeur de mesure de distance erronée pour une mesure de distance entre au moins deux dispositifs de communication mobiles, comprenant un premier dispositif de communication mobile (20) qui comporte un dispositif de mesure de distance (80) pour la mesure de la distance entre le premier dispositif de communication mobile et au moins un deuxième dispositif de communication mobile (20'), un dispositif de mesure (30) pour la mesure d'une variation de coordonnées de position relative du premier dispositif de communication mobile entre deux instants, et un dispositif d'évaluation et de commande (60), dans lequel ledit au moins un deuxième dispositif de communication mobiles (20') comprend un dispositif de mesure (30') pour la mesure d'une variation de coordonnées de position relative du deuxième dispositif de communication mobile (20') entre deux instants et un dispositif d'évaluation et de commande (60'), dans lequel le dispositif d'évaluation et de commande (60) du premier dispositif de communication mobile (20) est conçu pour :

a) amener le dispositif de mesure de distance (80) à mesurer à deux instants successifs t(i - 1) et t(i), avec i = 1, la distance entre le premier dispositif de communication mobile (20) et le deuxième dispositif de communication mobile (20'), afin d'obtenir dans chaque cas une valeur de mesure de distance aux instants t(i) et t(i - 1) ;
b1) amener le dispositif de mesure (30) du premier dispositif de communication mobile (20) à déterminer une variation de coordonnées de position relative du premier dispositif de communication mobile (20) entre l'instant t(i) et l'instant t(i - 1) précédent ;

b2) amener le dispositif de mesure (30') du deuxième dispositif de communication mobile (20') à déterminer une variation de coordonnées de position relative du deuxième dispositif de communication mobile (20') entre l'instant t(i) et l'instant t(i - 1) précédent, et inviter le deuxième dispositif de communication mobile (20') à transmettre les variations de coordonnées de position relative et les instants associés au premier dispositif de communication mobile (20),

c) déterminer pour l'instant t(i) la variation d'écart entre le premier dispositif de communication mobile (20) et le deuxième dispositif de communication mobile (20') en fonction de la variation de coordonnées de position du premier dispositif de communication mobile (20) mesurée entre l'instant t(i) et l'instant t(i - 1) précédent et en fonction de la variation de coordonnées de position du deuxième dispositif de communication mobile (20') mesurée entre l'instant t(i) et l'instant t(i - 1) précédent ;

d) calculer pour l'instant t(i) une première valeur de différence à partir de la valeur de mesure de distance mesurée à l'instant t(i) et de la valeur de mesure de distance mesurée à l'instant t(i - 1), et

e) calculer pour l'instant t(i) une deuxième valeur de différence entre la première valeur de différence déterminée à la caractéristique d) pour l'instant t(i) et l'instant antérieur t(i - 1) et la variation d'écart déterminée à la caractéristique c) entre l'instant t(i) et l'instant t(i - 1) précédent et vérifier si la deuxième valeur de différence calculée à l'instant t(i) présente une grandeur supérieure à celle d'une valeur seuil prédéfinie ou égale à une valeur seuil prédéfinie, afin de reconnaître une valeur de mesure de distance erronée.

16. Système de communication sans fil selon la revendication 14 ou 15, **caractérisé en ce que** le dispositif d'évaluation et de commande (60) du premier dispositif de communication mobile (20) est conçu pour répéter les caractéristiques a) à e) pour plusieurs instants t(i) successifs, avec i = 2, 3, ...n.

17. Système de communication sans fil selon l'une quelconque des revendications 14 à 16, **caractérisé en ce que** le dispositif d'évaluation et de commande (60) du premier dispositif de communication mobile (20) est conçu pour corriger une valeur de mesure de distance reconnue comme erronée.

18. Système de communication sans fil selon l'une quelconque des revendications 14 à 17, **caractérisé en ce que** le dispositif d'évaluation et de commande (60) du premier dispositif de communication mobile (20) est conçu pour exécuter un algorithme servant à déterminer la position du premier dispositif de communication mobile (20) à l'instant t(i) en prenant en considération la valeur de mesure de distance corrigée et la position du dispositif fixe ou du deuxième dispositif de communication mobile (20').

19. Système de communication sans fil selon l'une quelconque des revendications 14 à 18, **caractérisé en ce que** le dispositif de mesure (30 ; 30') des premier et deuxième dispositifs de communication mobiles contient un dispositif de mesure d'accélération respectif, et **en ce que** le dispositif de mesure de distance (60) est conçu pour réaliser une mesure de distance basée sur l'ISR (intensité du signal reçu) ou une mesure de distance basée sur un temps de propagation entre le premier dispositif de communication mobile (20) et le dispositif fixe ou entre le premier dispositif de communication mobile (20) et le deuxième dispositif de communication mobile (20').

20. Programme informatique contenant :

une pluralité d'instructions qui peuvent être mises en mémoire au moins dans un dispositif de communication mobile (20), dans lequel les instructions, lorsqu'elles sont lues et traitées par un dispositif d'évaluation et de commande (60) du dispositif de communication mobile (20), exécutent le procédé selon l'une quelconque des revendications 1 à 13.

EP 3 094 143 B1

10

20

Smartphone S1

70

Zeitgeber

Beschleunigungssensor

60

GPS-Empfänger

μP

30

90

52

40

Datenspeicher

Streckenmesseinrichtung

Programmspeicher

50

80

20'

Smartphone S2

70'

Zeitgeber

Beschleunigungssensor

60'

GPS-Empfänger

μP

30'

90'

52'

40'

Datenspeicher

Streckenmesseinrichtung

Programmspeicher

50'

80'

Fig. 1

| # | | | 0 | 1 | 2 | 3 | 4 | 5 | 6 | 7 | 8 | 9 | 10 |
|---|---|---|---|---|---|---|---|---|---|---|---|---|---|
| 1 | Zeitpunkt t(i) | [/] | 0 | 1 | 2 | 3 | 4 | 5 | 6 | 7 | 8 | 9 | 10 |
| 2 | S1X (t(i)) unbekannt | [m] | 3,00 | 4,00 | 4,50 | 6,00 | 7,00 | 8,00 | 9,00 | 10,00 | 11,00 | 12,00 | 13,00 |
| 3 | S1Y (t(i)) unbekannt | [m] | 3,00 | 3,00 | 3,00 | 3,00 | 3,00 | 2,00 | 2,00 | 2,00 | 2,00 | 2,00 | 3,50 |
| 4 | **S1dX (t(i);t(i-1))** | [m] | 1,00 | 0,95 | 0,55 | **1,60** | 0,90 | 1,00 | 0,90 | 1,10 | 0,95 | **0,90** | 0,95 |
| 5 | **S1dY (t(i);t(i-1))** | [m] | 0,05 | 0,00 | -0,05 | **-0,10** | 0,10 | -1,05 | 0,05 | -0,05 | 0,10 | **0,05** | 1,55 |
| 6 | S2X (t(i)) unbekannt | [m] | 3,00 | 4,00 | 5,00 | 6,00 | 7,00 | 8,00 | 9,00 | 10,00 | 11,00 | 12,00 | 12,50 |
| 7 | S2Y (t(i)) unbekannt | [m] | 0,00 | 0,00 | 0,00 | 0,00 | 1,00 | 0,00 | 0,00 | 0,00 | 0,00 | 0,00 | 0,50 |
| 8 | **S2dX (t(i);t(i-1))** | [m] | 0,95 | 1,05 | 0,95 | **1,05** | 1,10 | 1,05 | 1,00 | 0,90 | 1,05 | **0,90** | 0,55 |
| 9 | **S2dY (t(i);t(i-1))** | [m] | 0,05 | -0,05 | 0,10 | **0,15** | 1,05 | -1,00 | 0,05 | -0,05 | 0,10 | **-0,15** | 0,40 |
| 10 | **ds(t(i))=:ds(t(i);t(i-1))** | [m] | 0,05 | 0,11 | 0,43 | **0,60** | 0,97 | 0,07 | 0,10 | 0,20 | 0,10 | **0,20** | 1,22 |

$$ds(t(3)) = \text{ca. } \mathbf{0,60}.. = |\ \text{WURZEL}\ (\ (1{,}6-1{,}05)^2 + (-0{,}1-0{,}15)^2\ )\ |$$

S1dY (t(3)) =: S1dY (t(3);t(3-1))

S1dX (t(3)) =: S1dX (t(3);t(3-1))

S1 (t(0))  S1 (t(2))

S1 (t(3)) unbekannt u. fehlerfrei

S1 (t(3)) unbekannt u. fehlerbehaftet

S1 (t(9)) fehlerbehaftet

S1 Bewegung

+Y

+X

S2 Bewegung

S2dX (t(3))

S2 (t(0))  S2 (t(2))

S2 (t(3)) unbekannt u. fehlerbehaftet

S2 (t(9)) fehlerbehaftet

S2dY (t(3))  S2 (t(3)) unbekannt u. fehlerfrei

Fig. 2

Grafik A:

S1dY (t(i)) =: S1dY (t(i);t(i-1))

S1dX (t(i)) =: S1dX (t(i);t(i-1))

S1 (t(i-1))
unbekannt fehlerfrei

S1 (t(i)) unbekannt u. fehlerfrei

S1 (t(i)) unbekannt u. fehlerbehaftet

sS1S2 (t(i-1))
unbekannt fehlerfrei

+Y

S2dX (t(i))

S2 (t(i)) unbekannt u. fehlerbehaftet

S2 (t(i-1))
unbekannt fehlerfrei

S2 (t(i)) unbekannt u. fehlerfrei

S2dY (t(i))

+X

Grafik B:

S1dY (t(i)) =: S1dY (t(i);t(i-1))

S1dX (t(i)) =: S1dX (t(i);t(i-1))

S1 (t(i-1))
unbekannt fehlerfrei

S1 (t(i)) unbekannt u. fehlerbehaftet

sS1S2 (t(i-1))
unbekannt fehlerfrei

S2dY (t(i))

+Y

**ds(t(i))**

S2dX (t(i))

S2 (t(i-1))
unbekannt fehlerfrei
= S2(t(i))
fehlerbehaftet verschoben um S2d(t(i))

alpha

S1 (t(i)) unbekannt u. fehlerbehaftet
verschoben um
S2d(t(i))=(S2dX(t(i));S2dY(t(i)))

+X

Fig. 3

| # | | |
|---|---|---|
| 1 | Zeitpunkt t(i) | [/] |
| 2 | S1X (t(i)) unbekannt | [m] |
| 3 | S1Y (t(i)) unbekannt | [m] |
| 4 | **S1dX (t(i);t(i-1))** | [m] |
| 5 | **S1dY (t(i);t(i-1))** | [m] |
| 6 | S2X (t(i)) unbekannt | [m] |
| 7 | S2Y (t(i)) unbekannt | [m] |
| 8 | **S2dX (t(i);t(i-1))** | [m] |
| 9 | **S2dY (t(i);t(i-1))** | [m] |
| 10 | **ds(t(i))=:ds(t(i);t(i-1))** | [m] |

Grafik C: Extremwerte zur Streckenkorrektur sS1S2
bei alpha=0 Grad und 180 Grad durch (+)(-) ds(t(i))

S1dY (t(i)) =: S1dY (t(i);t(i-1))

S1 (t(i-1))
unbekannt u. fehlerfrei

S1dX (t(i)) =: S1dX (t(i);t(i-1))

S1 (t(i)) unbekannt u. fehlerbehaftet

**ds(t(i))**

S2dY (t(i))

sS1S2 (t(i-1))
unbekannt u. fehlerfrei

S2dX (t(i))

S2 (t(i-1))
unbekannt u. fehlerfrei

Hier Fall:
alpha=0 Grad

**ds(t(i))** = I WURZEL ( ( S1dX(t(i))-S2dX(t(i)) )² + ( S1dY(t(i))-S2dY(t(i)) )² ) I

Die zwei Extremwerte für sS1S2(t(i)) bei alpha 0 Grad oder 180 Grad folgen aus:

**Maximum von sS1S2 bei:  sS1S2 (t(i)) =  sS1S2 (t(i-1)) + ds(t(i))**
**Minimum von  sS1S2 bei:  sS1S2 (t(i)) =  sS1S2 (t(i-1)) - ds(t(i))**

+Y

+X

Fig. 4

EP 3 094 143 B1

| # | | | 0 | 1 | 2 | 3 | 4 | 5 | 6 | 7 | 8 | 9 | 10 |
|---|---|---|---|---|---|---|---|---|---|---|---|---|---|
| 1 | Zeitpunkt t(i) | [/] | 0 | 1 | 2 | 3 | 4 | 5 | 6 | 7 | 8 | 9 | 10 |
| 10 | ds(t(i))=:ds(t(i);t(i-1)) | [m] | 0,05 | 0,11 | 0,43 | 0,60 | 0,97 | 0,07 | 0,10 | 0,20 | 0,10 | 0,20 | 1,22 |
| 11 | Hi(t(i)) gegeben | [ss] | -7,30 | -7,50 | -8,10 | 0,00 | 0,00 | 0,00 | -4,50 | -4,50 | -4,50 | 0,00 | 0,00 |
| 12 | RSS(t(i)) inkl. Hi(t(i)) | [ss] | 1,95 | 3,25 | 1,39 | 10,45 | 16,20 | 14,60 | 9,50 | 9,20 | 9,80 | 16,00 | 11,47 |
| 13 | sa(t(i)) aus RSS(t(i)) | [m] | **4,61** | **4,35** | **4,72** | 2,91 | 1,76 | 2,08 | **3,10** | **3,16** | **3,04** | 1,80 | 2,71 |
| 14 | dsa(i)=:dsa(t(i);t(i-1)) | [m] | 0,25 | -0,26 | 0,37 | -1,81 | -1,15 | 0,32 | 1,02 | 0,06 | -0,12 | -1,24 | 0,91 |
| 15 | T1(i)=(-)d(t(i))= ABS(ds(t(i)))-ABS(dsa(i)) | [m] | 0,20 | -0,15 | -0,05 | -1,21 | -0,18 | 0,25 | 0,92 | -0,14 | -0,02 | -1,04 | -0,31 |
| 16 | T1sig(i)=T1(i)/sigT1(i) | [/] | 0,52 | -0,38 | -0,14 | **-3,10** | -0,52 | 0,85 | **3,13** | -0,48 | -0,07 | **-3,54** | -0,90 |
| 17 | sS1S2(t(i))=: s(i) wahr | [m] | 3,00 | 3,00 | 3,04 | 3,00 | 2,00 | 2,00 | 2,00 | 2,00 | 2,00 | 2,00 | 3,04 |

Fig. 5

| # | | [/] | 0 | 1 | 2 | 3 | 4 | 5 | 6 | 7 | 8 | 9 | 10 |
|---|---|---|---|---|---|---|---|---|---|---|---|---|---|
| 1 | Zeitpunkt t(i) | [/] | **0** | **1** | **2** | **3** | **4** | **5** | **6** | **7** | **8** | **9** | **10** |
| 10 | ds(t(i))=:ds(t(i);t(i-1)) | [m] | 0,05 | 0,11 | 0,43 | 0,60 | 0,97 | 0,07 | 0,10 | 0,20 | 0,10 | 0,20 | 1,22 |
| 11 | Hi(t(i)) gegeben | [ss] | -7,30 | -7,50 | -8,10 | 0,00 | 0,00 | 0,00 | -4,50 | -4,50 | -4,50 | 0,00 | 0,00 |
| 12 | RSS(t(i)) inkl. Hi(t(i)) | [ss] | 1,95 | 3,25 | 1,39 | 10,45 | 16,20 | 14,60 | 9,50 | 9,20 | 9,80 | 16,00 | 11,47 |
| 13 | sa(t(i)) aus RSS(t(i)) | [m] | **4,61** | **4,35** | **4,72** | 2,91 | 1,76 | 2,08 | **3,10** | **3,16** | **3,04** | 1,80 | 2,71 |
| 14 | dsa(i)=:dsa(t(i);t(i-1)) | [m] | 0,25 | -0,26 | 0,37 | -1,81 | -1,15 | 0,32 | 1,02 | 0,06 | -0,12 | -1,24 | 0,91 |
| 15 | T1(i)=(-)d(t(i))= ABS(ds(t(i)))-ABS(dsa(i)) | [m] | 0,20 | -0,15 | -0,05 | -1,21 | -0,18 | 0,25 | 0,92 | -0,14 | -0,02 | -1,04 | -0,31 |
| 16 | T1sig(i)=T1(i)/sigT1(i) | [/] | 0,52 | -0,38 | -0,14 | **-3,10** | -0,52 | 0,85 | **3,13** | -0,48 | -0,07 | **-3,54** | -0,90 |
| 17 | saK(t(i))=F(t(i);t(i-1);...) | [m] | -1,21 | -1,21 | -1,21 | 0,00 | 0,00 | 0,00 | -0,92 | -0,92 | -0,92 | 0,00 | 0,00 |
| 18 | sA(t(i))=sa(t(i))+saK(t(i)) | [m] | **3,40** | **3,14** | **3,51** | 2,91 | 1,76 | 2,08 | **2,18** | **2,24** | **2,12** | 1,80 | 2,71 |
| 19 | sS1S2(t(i))=: s(i) wahr | [m] | 3,00 | 3,00 | 3,04 | 3,00 | 2,00 | 2,00 | 2,00 | 2,00 | 2,00 | 2,00 | 3,04 |

Fig. 6

identische Rückwärtskorrekturen mit saK(t(2)) zum Zeitpunkt t(2)

identische Vorwärtskorrekturen mit saK(t(6)) zu den Zeitpunkten t(7) und t(8)

EP 3 094 143 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030170484 A
- WO 2014180845 A